# EUROPEAN PATENT APPLICATION

(11) **EP 4 671 975 A1**
(43) Date of publication of application: **31.12.2025**
(21) Application number: 25174486.8
(22) Date of filing: 06.05.2025
(51) Int. Cl.: G06F 9/38

(54) **PROCESSORS, METHODS, AND SYSTEMS FETCH AND DECODE AT LEAST TWO IN-ORDER SEQUENCES OF INSTRUCTIONS IN PARALLEL**

(30) Priority: 28.06.2024 US 202418759751
(71) Applicant: Intel Corporation, Santa Clara, CA 95054 (US)
(72) Inventor: BUDHIYA, Ketan Mahendra, 560048 Bangalore (IN); NORI, Anant Vithal, 560037 Bangalore (IN); SUBRAMONEY, Sreenivas, 560103 Bangalore (IN)
(74) Representative: Viering, Jentschura & Partner mbB Patent- und Rechtsanwälte

(57) **Abstract**

A processor of an aspect includes a front end unit. The front end unit is to fetch and decode in parallel a first in-order sequence of instructions and a second in-order sequence of instructions. The first in-order sequence of instructions occurs before the second in-order sequence of instructions in program order. The processor also includes a back end unit coupled with the front end unit. The back end unit is to execute decoded instructions provided from the front end unit. Other processors, methods, systems, and instructions are disclosed.

## Description

### BACKGROUND

### Technical Field

Embodiments described herein generally relate to processors. In particular, embodiments described herein generally relate to fetch and decode of instructions in processors.

### Background Information

Program code typically includes one or more types of conditional branch instructions. Conditional branch instructions are also sometimes known simply as conditional branches, conditional jump instructions, or conditional jumps. An examples of such a conditional branch is a "branch if condition is (or is not) true" type of instruction. The conditional branch may cause the flow of execution to proceed along either a first (e.g., taken) path or a second (e.g., not taken) path. Whether the first or second path should be taken may depend upon the evaluation of a condition associated with the branch instruction (e.g., whether the condition is (or is not) true). However, the evaluation of the condition is typically not performed until substantially later in time. Waiting for the condition to be evaluated, so that the branch direction can be known with certainty, unnecessarily slows down the fetching and decoding of additional instructions thereby limiting performance.

### BRIEF DESCRIPTION OF THE DRAWINGS

Various examples in accordance with the present disclosure will be described with reference to the drawings, in which:
**FIG. 1** is a block diagram of an embodiment of a processor.
**FIG. 2** illustrates an example of control flow transfers between a program code and a procedure code due to call and return instructions.
**FIG. 3** is a block diagram of an embodiment of a processor having a detailed example embodiment of front end unit, including an embodiment of circuitry or other logic to control the front end unit to fetch and decode a second in-order sequence of instructions in parallel with a first in-order sequence of instructions.
**FIG. 4** is a block diagram of an embodiment of a processor having a detailed example embodiment of front end unit having a detailed example embodiment of circuitry or other logic to control the front end unit to fetch and decode a second in-order sequence of instructions in parallel with a first in-order sequence of instructions.
**FIG. 5** is a block flow diagram of an embodiment of a method of determining a subset of second in-order sequences of instructions to fetch and decode.
**FIG. 6** is a block flow diagram of an embodiment of a method of a fetching and decoding a second in-order sequence of instructions into a second sequence decoded instruction queue.
**FIG. 7** is a block flow diagram of an embodiment of a method of a fetching and decoding a second in-order sequence of instructions into a decoded instruction queue for execution by a back end unit.
**FIG. 8** illustrates an example computing system.
**FIG. 9** illustrates a block diagram of an example processor and/or System on a Chip (SoC) that may have one or more cores and an integrated memory controller.
**FIG. 10(A)** is a block diagram illustrating both an example in-order pipeline and an example register renaming, out-of-order issue/execution pipeline according to examples.
**FIG. 10(B)** is a block diagram illustrating both an example in-order architecture core and an example register renaming, out-of-order issue/execution architecture core to be included in a processor according to examples.
**FIG. 11** illustrates examples of execution unit(s) circuitry.
**FIG. 12** is a block diagram of a register architecture according to some examples.
**FIG. 13** illustrates examples of an instruction format.
**FIG. 14** illustrates examples of an addressing information field.
**FIG. 15** illustrates examples of a first prefix.
**FIGS. 16(A)****-(D)** illustrate examples of how the R, X, and B fields of the first prefix in **FIG. 15** are used.
**FIGS. 17(A)****-(B)** illustrate examples of a second prefix.
**FIG. 18** illustrates examples of a third prefix.
**FIG. 19** is a block diagram illustrating the use of a software instruction converter to convert binary instructions in a source instruction set architecture to binary instructions in a target instruction set architecture according to examples.

### DETAILED DESCRIPTION OF EMBODIMENTS

Disclosed herein are embodiments of processors, front end units, methods, and systems to fetch and decode at least two in-order sequences of instructions concurrently or otherwise in parallel. In the following description, numerous specific details are set forth (e.g., specific processor configurations, microarchitectural details, sequences of operations, etc.). However, embodiments may be practiced without these specific details. In other instances, well-known circuits, structures and techniques have not been shown in detail to avoid obscuring the understanding of the description.

Processors commonly include front end units and back end units. The front end units fetch and decode instructions of program code into decoded instructions. The back end units execute the decoded instructions to generate results corresponding to the instructions.

As mentioned in the background section, the program code typically includes one or more types of conditional branch instructions. The front end units commonly include a branch prediction unit. The branch prediction unit may help to improve fetching and decoding throughput by predicting the directions of such conditional branch instructions prior to the evaluation of the condition associated with the branch instruction. For example, the branch prediction unit may collect and use branch prediction context (e.g., past branch history or other branch prediction information (e.g., as well as other information like the current instruction pointer, the next instruction pointer, information about the current instruction (e.g. whether it is a special instruction, whether there is a fault, etc.)) to predict the directions of the conditional branches. Predicting the conditional branches may help to avoid needing to wait on the evaluation of the condition associated with the conditional branch before fetching additional instructions and processing them speculatively under the assumption that the prediction of the conditional branch is correct.

Once the condition associated with the conditional branch is evaluated, the branch direction will be known with certainty, and the predicted branch direction will either have been correct or incorrect. If the prediction was correct, then the results and/or state of the speculatively executed instructions along the predicted branch direction may be utilized. In this case, the performance of the processor will have been increased due to greater utilization of pipeline stages that would otherwise have been dormant (or at least underutilized) while waiting on the evaluation of the condition associated with the conditional branch. However, if the prediction was incorrect, then the results and/or state of the instructions speculatively executed along the predicted branch direction will typically be incorrect and will need to be discarded. For example, the pipeline may be flushed (e.g., discarding the instructions currently in flight in the pipeline), processing may be rewound back at the conditional branch, and execution may proceed along the alternate now correctly known branch direction. This outcome is undesirable since it tends to reduce performance and consume more power.

Now, it tends to be challenging for the front end units of many modern day processors to be able to consistently fetch and decode enough instructions to keep the back end units of the processors sufficiently busy and/or not idle. This tends to be especially the case for processors that have back end units with increasingly wide pipelines and/or increasingly deep pipelines. The wide pipelines may allow multiple instructions to be processed in parallel. The deep pipelines may allow multiple instructions to be in different phases of execution at the same time to increase the amount of parallelism. Such wider and/or deeper pipelines tend to consume more instructions at a time. This places more demand load on the front end unit to fetch and decode more instructions per unit time to keep the back end unit busy and/or not idle.

To help address this challenge, the front end unit may attempt to aggressively run far ahead of the back end unit by fetching and decoding instructions well in advance of when they are needed. Conventionally, this has been done along a single in-order sequence or path of instructions that is based on a single context. However, the front end unit and/or its branch prediction unit is inherently imperfect. Events like flushes due to miss-predicted branch directions and/or misses in the instruction cache(s) may cause the fetch and decode of younger instructions to be stalled behind older instructions facing these events. For example, if a conditional branch is miss-predicted, the front end unit and/or the branch predictor may need to flush the pipeline, rewind back to the miss-predicted conditional branch, and begin fetching new or different instructions along the miss-predicted branch direction path. This miss-predicted path is not along the single in-order sequence or path of instructions so its instructions will typically not have already been fetched and decoded yet. Moreover, the longer the single in-order sequence or path of instructions, generally the greater the likelihood of a conditional branch direction being miss-predicted somewhere along the single in-order sequence or path of instructions, and therefore also generally the greater the likelihood the processor will need to flush the pipeline, rewind back to the miss-predicated conditional branch, and fetch and decode new instructions along the correct path. Furthermore, there is also a greater likelihood that some of the instructions fetched by aggressively running far ahead of the back end unit will be removed from the instruction caches before the time when they are needed. Thus, there are limits on the ability of the front end unit and/or the branch prediction unit to aggressively run increasingly farther ahead of the back end unit along a single in-order sequence or path of instructions. Also, the increased likelihood of miss-predicted branches resulting from such aggressive run ahead along the single in-order sequence or path of instructions may tend limit the performance of the processor and increase its power consumption.

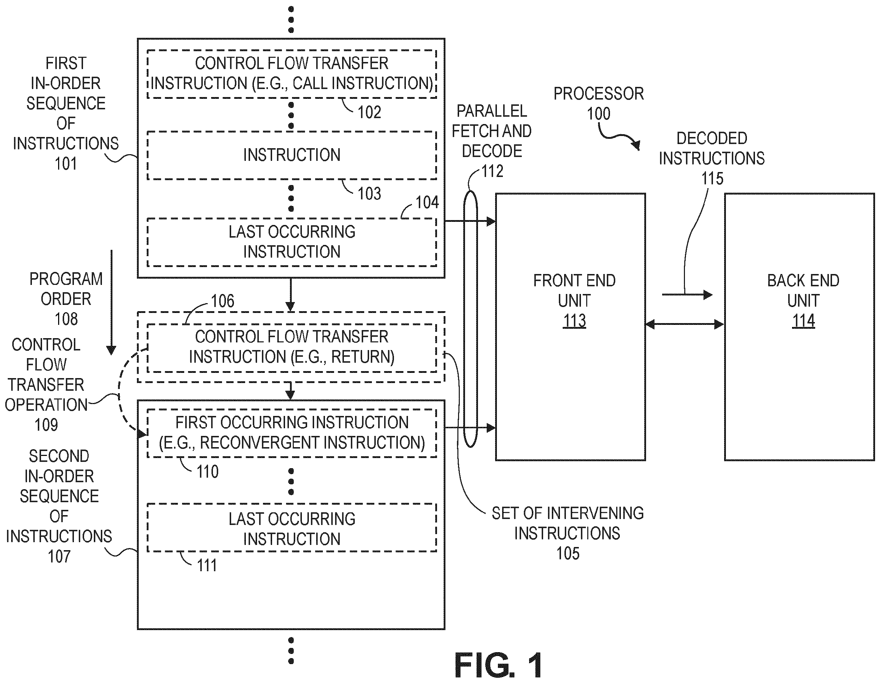

FIG. 1 is a block diagram of an embodiment of a processor 100. In some embodiments, the processor may be a general-purpose processor (e.g., a general-purpose microprocessor or central processing unit (CPU) of the type used in desktop, laptop, server, cell phone, or other computers). Alternatively, the processor may be a special-purpose processor. Examples of suitable special-purpose processors include, but are not limited to, graphics processors, network processors, communications processors, machine-learning processors, co-processors, embedded processors, digital signal processors (DSPs), and controllers (e.g., microcontrollers). The processor may have any of various complex instruction set computing (CISC) architectures, reduced instruction set computing (RISC) architectures, very long instruction word (VLIW) architectures, hybrid architectures, and other types of architectures. The processor may either be an in-order execution processor or an out-of-order execution processor. In some embodiments, the processor may include (e.g., be disposed on) at least one integrated circuit or semiconductor die.

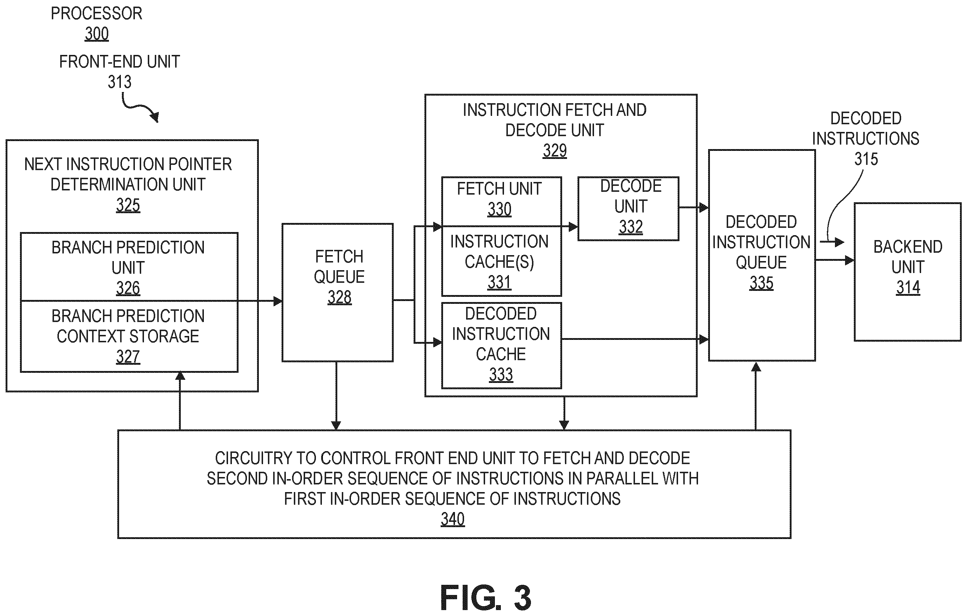

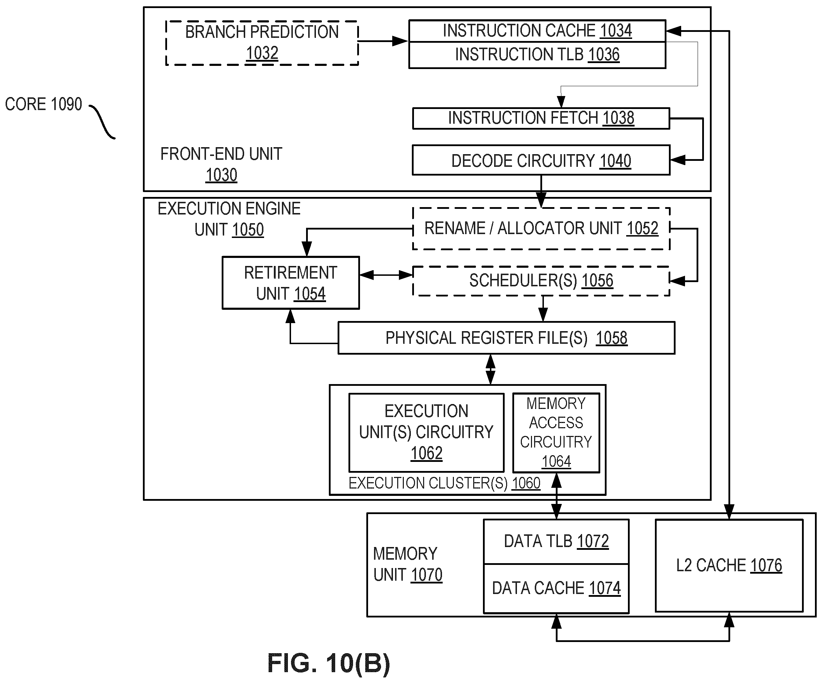

The processor includes a front end unit 113. As used herein, the term "front end unit" broadly represents a portion of the processor that includes at least: (1) an instruction fetch unit and/or instruction fetch circuitry and/or an instruction fetch pipeline stage, or other instruction fetch logic to fetch instructions; and (2) a decode unit and/or decode circuitry and/or a decode pipeline stage and/or other decode logic to decode the instructions into one or more corresponding decoded instructions. The instructions may represent macroinstructions, machine code instructions, or instructions of an instruction set of a processor. The front end unit may also optionally include other components, such as, for example, a next instruction pointer unit, a branch prediction unit, a branch prediction context storage, a fetch queue, one or more instruction caches, one or more instruction translation lookaside buffers (TLBs), a decoded instruction cache, a decoded instruction queue, and other units and/or circuitry and/or pipeline stages and/or logic as disclosed herein, and any combination thereof. In some embodiments, the front end unit may include any of the front end units disclosed elsewhere herein (e.g., the front end unit 313 in **FIG. 3****,** the front end unit 413 in **FIG. 3****,** the front end unit 1030 in **FIG. 10B**).

In some embodiments, the front end unit may be operable (e.g., include circuitry or other logic operable) to fetch (e.g., load from an instruction cache or memory, or otherwise obtain) and decode (e.g., actually decode or lookup or otherwise obtain an already decoded instruction such as from a decoded instruction cache) concurrently or otherwise in parallel 112; a first (e.g., main) in-order sequence of instructions 101 and a second (e.g., reconvergent or further ahead) in-order sequence of instructions 107. As used herein, an "in-order" sequence or path of instructions means a sequence or path of instructions in actual or at least predicted program order (e.g., there may potentially be branch miss-prediction and/or miss-speculation along the in-order sequence or path but it follows actual or at least predicted program order). The fetching and decoding concurrently or otherwise in parallel means that there is at least some overlap between the fetching and decoding of the first and second in-order sequences of instructions. For example, this may include switching or alternating one or more times between fetching and decoding instructions of the first and second in-order sequences of instructions. As one example, this may include fetching and decoding some (but not all) of the instructions of the first in-order sequence of instructions, then (e.g., on one or more subsequent clock cycles) fetching and decoding one or more or potentially all of instructions of the second in-order sequence of instructions, then (e.g., on one or more subsequent clock cycles) fetching and decoding one or more instructions of the first in-order sequence of instructions. That is, the fetch and decode of the second in-order sequence of instructions may be performed at one or more intermediate times before the fetch and decode of the first in-order sequences of instructions is completed. In some embodiments, the fetch and decode of the second in-order sequences of instructions may be performed at times (e.g., on clock cycles) when the processor and/or the front end unit would experience a stall in fetching and decoding instructions of the first in-order sequences of instructions.

The entire first in-order sequence of instructions 101 may be before or prior to the second in-order sequence of instructions 107 in program order (e.g., actual or at least predicted) as shown by a downward arrow 108. In various embodiments, the first in-order sequence of instructions may include at least thirty, forty, fifty, or more instructions, although the scope of the invention is not limited to any known number. In various embodiments, the second in-order sequence of instructions may include at least ten, twenty, thirty, forty, fifty, or more instructions, although the scope of the invention is not limited to any known number. The second in-order sequence of instructions includes the last occurring instruction 111 of the second in-order sequence of instructions. In some embodiments, the front end unit may stop the fetch and decode of the second in-order sequence of instructions after a predetermined or configurable number (e.g., ten, twenty, thirty, forty, fifty, or more) of instructions of the second in-order sequence of instructions have been fetched and decoded.

In some embodiments, the second in-order sequence of instructions 107 may optionally be separated from the first in-order sequence of instructions 101 by a set of intervening instructions 105. The set of intervening instructions may optionally not be fetched and decoded concurrently or otherwise in parallel with the first and second in-order sequences of instructions. In some embodiments, the front end unit may fetch and decode a first occurring instruction 110 of the second in-order sequence of instructions immediately after (e.g., on an immediately subsequent clock cycle) fetching and decoding a given instruction (e.g., an intermediate instruction 103) of the first in-order sequence of instructions. In some embodiments, the first occurring instruction 110 may be separated from the given instruction (e.g., the intermediate instruction 103) by a number (e.g., in some cases at least twenty, thirty, forty, fifty, various other numbers, or more) of intervening in-order instructions (e.g., all of the instructions after the intermediate instruction 103 up to a last occurring instruction 104 plus the optional intervening instructions 105.

In some embodiments, the second in-order sequence of instructions 107 may be based on at least one control flow transfer operation (e.g., control flow transfer operation 109) and/or at least one control flow transfer instruction (e.g., instruction 102 and/or instruction 106). In some embodiments, the second in-order sequence of instructions 107 may optionally be related to the first in-order sequence of instructions 101 based on at least one control flow transfer operation (e.g., control flow transfer operation 109) and/or at least one control flow transfer instruction (e.g., instruction 102 and/or instruction 106). As used herein, a "control flow transfer operation" broadly refers to a jump, branch, call, or other movement in the program code that is not merely an incrementation or decrementation of the program counter by one. Program code typically has diverse types of control flow transfer operations. One example of a suitable control flow transfer operation is a call to a procedure (also called functions or subroutines) operation due to call instruction from which there will be a corresponding return or reconvergence operation to a target or reconvergence instruction due to a corresponding return instruction. Another example of a suitable control flow transfer operation is a call to a hypervisor or virtual machine monitor (VMM) operation due to hypervisor call instruction from which there will be a corresponding return or reconvergence operation to a target or reconvergence instruction. Another example of a suitable control flow transfer operation is a call to a supervisor or higher privilege level operation due to supervisor call instruction from which there will be a corresponding return or reconvergence operation to a target or reconvergence instruction. Yet another example of a suitable control flow transfer operation is a vector or other control flow transfer to an interrupt handler operation due to interrupt from which there will be a return or reconvergence operation to a target or reconvergence instruction after the interrupt has been handled.

In some embodiments, a first occurring instruction 110 of the second in-order sequence of instructions may be a reconvergent instruction associated with a control flow transfer operation (e.g., control flow transfer operation 109) to be performed based on the first in-order sequence of instructions. For example, in some embodiments, the first occurring instruction 110 of the second in-order sequence of instructions may be a target instruction of a return instruction or other control flow transfer instruction 106 corresponding to (e.g., by another control flow transfer operation) a call instruction or other control flow transfer instruction 102 of the first in-order sequence of instructions. The target of the return instruction is one example of a type of reconvergent instruction. In some embodiments, the first occurring instruction 110 of the second in-order sequence of instructions may be indicated by the control flow transfer instruction 106 (e.g., a return from procedure instruction). In the illustration the control flow transfer instruction 106 is in the intermediate instructions 105 although it may instead be in the first in-order sequence of instructions.

In some embodiments, at least the first occurring instruction 110 (e.g., and often also an in-order sequence of instructions immediately after the first occurring instruction 110 until at least the first occurring conditional branch instruction or other speculative instruction of the second in-order sequence of instructions) may be guaranteed (e.g., at least normally guaranteed except if there are restarts, terminal faults, or other such unusual events) to be executed after the first in-order sequence of instructions. For example, execution of these instructions may not be speculative and/or may not be susceptible to branch miss-prediction.

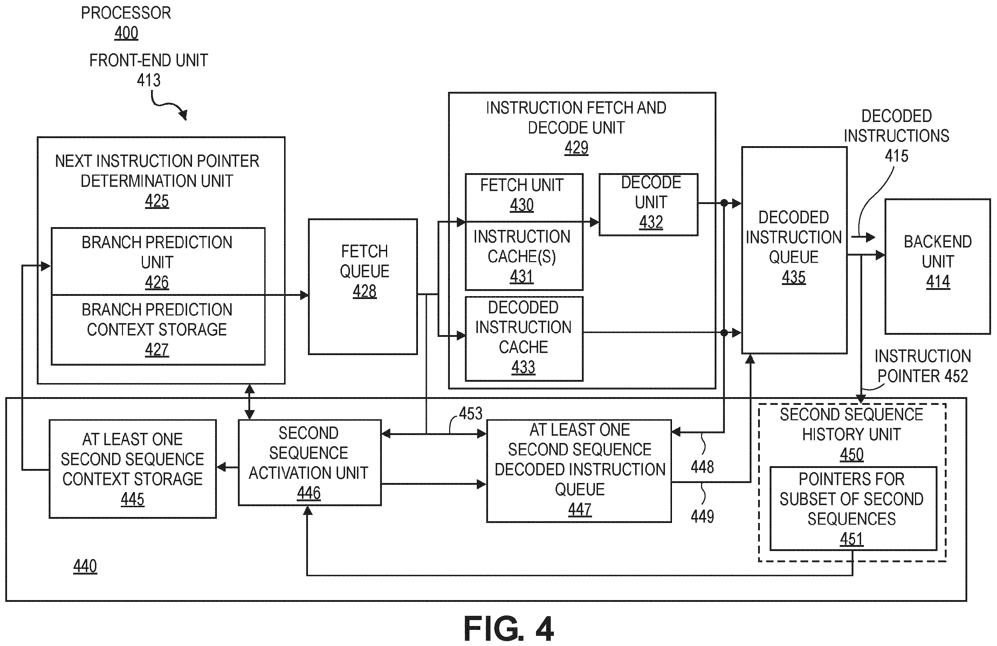

Referring again to **FIG. 1****,** the processor also includes a back end unit 114 coupled with the front end unit 113. As used herein, the term "back end unit" broadly represents a portion of the processor that includes at least a plurality of different types of execution units. Examples of suitable execution units include, but are not limited to, arithmetic logic units (ALUs), scalar execution units, single-instruction, multiple-data (SIMD) execution units (also known as vector execution units), memory access units (e.g., load-store units), and the like, and any combination thereof. The back end unit may also optionally include other components, such as, for example, a register rename and allocator unit, a scheduler unit, a retirement or commit unit, or a combination thereof. In some embodiments, the back end unit may include any of the back end units disclosed elsewhere herein (e.g., the back end unit 314 in **FIG. 3****,** the back end unit 413 in **FIG. 4****,** the back end unit including the execution engine unit 1050 in **FIG. 10(B)**). The back end unit may be operable to receive and execute decoded instructions 115 provided from the front end unit. The back end unit may either execute instructions in-order or out-of-order.

As mentioned above, in some embodiments, the second in-order sequence of instructions 107 may be based on one or more control flow transfer operations (e.g., control flow transfer operation 109) and/or at least one control flow transfer instruction (e.g., instruction 102 and/or instruction 106). In some embodiments, the second in-order sequence of instructions 107 may be related to the first in-order sequence of instructions 101 based on one or more control flow transfer operations (e.g., control flow transfer operation 109). To further illustrate certain concepts, further details will now be described for call and return type of control flow transfer operations. It is to be appreciated that other types of control flow transfer operations (e.g., the types mentioned above) are also suitable.

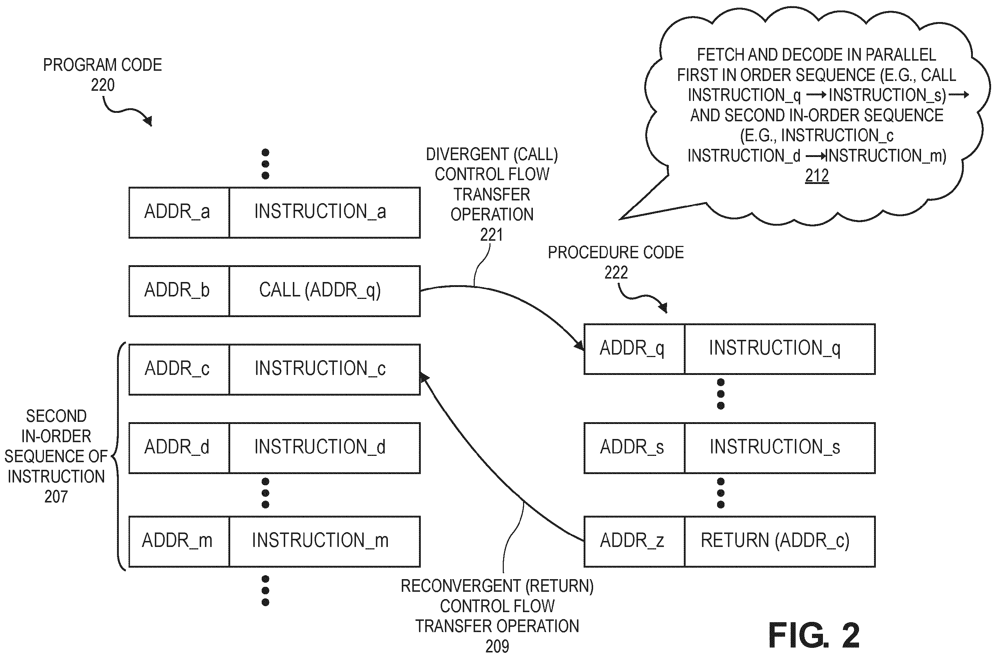

**FIG. 2** illustrates an example of control flow transfers 221, 209 between a program code 220 and a procedure code 222 due to call and return instructions. The program code is sometimes referred to as application code (or simply an application) or calling code. The procedure code is sometimes referred to as a function code, subroutine code, or called code (or simply a function, subroutine, or procedure).

The program code typically includes many instructions, including an instruction_a at an address addr_a, a call instruction at an address addr_b, an instruction_c at an address addr_c, an instruction_d at an address addr_d, up to an instruction_m at an address addr_m. The call instruction (e.g., a call procedure instruction) is sometimes referred to by different names, such as, for example, a branch-with-link (BL) instruction, a start procedure (or function or subroutine) instruction, or the like. The call instruction represents one type of control flow transfer instruction.

The procedure code includes an instruction_q at an address addr_q, up to an instruction_s at an address_s, up to a return instruction at an address addr_z. Often, there may be many (e.g., from tens to hundreds) of instructions in the procedure code. The return instruction (e.g., a return from procedure instruction) is sometimes referred to by different names, such as, for example, a procedure (or function or subroutine) end instruction.

The call instruction may specify or otherwise indicate an address (e.g., in this case addr_q) of the first or initial instruction (e.g., in this case instruction_q) of the procedure code. Execution of the call instruction may cause a divergent (e.g., call) control flow transfer operation 221 to be performed to cause execution to start at this first or initial instruction of the procedure code (e.g., in this case instruction_q). Execution may then proceed through the other instructions of the procedure code until the return instruction at addr_z is eventually reached.

The return instruction may implicitly indicate a target instruction of the program code to which execution should return. By way of example, the processor may implicitly know when it identifies the return instruction to read the return address off the stack from a location pointed to by the stack pointer. This is just one example and other architectures may do it differently (e.g., based on a link register, etc.). Commonly, the target instruction is either the instruction immediately after the call instruction or the call instruction itself. In the illustrated example, the return instruction implicitly indicates a return address as addr_c corresponding to instruction_c, which is the instruction immediately after the call instruction. Execution of the return instruction may cause a reconvergent (e.g., return) control flow transfer operation 209 to be performed to cause execution to resume at the target instruction (e.g., in this case instruction_c).

As shown by a callout 212, in some embodiments, a front end unit may be operable (e.g., include circuitry or other logic operable) to fetch (e.g., load or otherwise obtain) and decode (e.g., actually decode or obtain already decoded instructions such as from a decoded instruction cache) concurrently or otherwise in parallel a first (e.g., main) in-order sequence of instructions and a second (e.g., further ahead and/or reconvergent) in-order sequence of instructions. For example, in the illustrated example, the first in-order sequence of instructions may include the call instruction, the instruction _q, and the instructions between instruction_q through the instruction_s. The second in-order sequence of instructions may include the instruction_c, the instruction_d, and the instructions between the instruction_d through the instruction_m.

The second in-order sequence of instructions is based on the divergent (e.g., call) control flow transfer operation 221 and/or the reconvergent (e.g., return) control flow transfer operation 209. The second in-order sequence of instructions is related to the first in-order sequence of instructions based on the divergent (e.g., call) control flow transfer operation 221 and/or the reconvergent (e.g., return) control flow transfer operation 209. The first occurring instruction (e.g., the instruction _c) of the second in-order sequence of instructions may represent a return target instruction or other reconvergent instruction associated with a control flow transfer operation (e.g., the reconvergent (e.g., return) control flow transfer operation). In some embodiments, the first occurring instruction (e.g., the instruction_c) of the second in-order sequence of instructions may be specified or otherwise indicated by a control flow transfer instruction (e.g., the return instruction).

The first in-order sequence of instructions occurs before the second in-order sequence of instructions in program order. In some embodiments, the second in-order sequence of instructions may optionally be separated from the first in-order sequence of instructions by a set of intervening instructions (e.g., instructions after the instruction_s through the return instruction). In some embodiments, these intervening instructions may not be fetched and decoded concurrently or otherwise in parallel with the first and second in-order sequences of instructions.

In some embodiments, at least the first occurring instruction (e.g., the instruction_c) of the second in-order sequence of instructions (e.g., and often also an in-order sequence of instructions immediately after the first occurring instruction until at least the first occurring conditional branch instruction or other speculative instruction of the second in-order sequence of instructions) may be guaranteed (e.g., at least normally guaranteed except if there are restarts, terminal faults, or other such unusual events) to be executed after the first in-order sequence of instructions. For example, execution of these instructions may not be speculative and/or may not be susceptible to branch miss-prediction. Regardless of whether there are miss-predicted conditional branches in the first in-order sequence of instructions, it is thus expected that the procedure code will eventually return to and execute the second in-order sequence of instructions. As a result, fetching and decoding the second in-order sequence of instructions typically represents productive work that will eventually be used. Also, fetching and decoding the second in-order sequence of instructions will help to ensure that these instructions are readily available when execution eventually reaches the return instruction, which may help to reduce stalls in the front end unit or otherwise improve performance. Also, in some cases, the procedure code may be relatively large, and in such cases the return target instruction or other reconvergent instruction may be relatively far removed (e.g., in some cases more than twenty, thirty, forty, fifty, various other numbers,, or more instructions removed) from the call instruction (e.g., in terms of the number of instructions executed in-order between the call instruction and the return instruction). In such cases, fetching and decoding the second in-order sequence of instructions may represent relatively deep or aggressive run ahead fetching and decoding.

**FIG. 3** is a block diagram of an embodiment of a processor 300 having a detailed example embodiment of front end unit 313, including an embodiment of circuitry 340 to control the front end unit to fetch and decode a second in-order sequence of instructions in parallel with a first in-order sequence of instructions. In some embodiments, the front end unit 313 may optionally be used as the front-end unit 113 of **FIG. 1****.** Alternatively, the front-end unit 113 of **FIG. 1** may optionally include a similar or different front end unit.

The front end unit 313 is operable to fetch (e.g., obtain) and decode instructions of programs or code being performed by the processor. The front end unit includes a next instruction pointer determination unit 325, which is coupled with a fetch queue 328, which is coupled with an instruction fetch and decode unit 329, which is coupled with a decoded instruction queue 335. The next instruction pointer determination unit is operable to determine the next instruction pointer (e.g., a memory address or location) for a next instruction to be fetched and decoded. The next instruction pointer determination unit includes a branch prediction unit 326 coupled with a branch prediction context storage 327. The branch prediction unit is operable to perform branch prediction to predict the directions of conditional branch instructions using branch prediction context from the branch prediction context storage.

The fetch queue is operable to store the determined next instruction pointers. The fetch queue is also sometimes known as a branch prediction queue (BPQ). The instruction fetch and decode unit is operable to fetch (e.g., obtain) instructions corresponding to the instructions identified by the next instruction pointers in the fetch queue decode, decode these instructions, and provide one or more corresponding decoded instructions to the decoded instruction queue 335. The instruction fetch and decode unit includes a fetch unit 330, one or more instruction caches 331, a decode unit 332, and a decoded instruction cache 333. The fetch unit is coupled with the instruction cache(s) and with the decode unit. The next instruction pointer from the fetch queue may be used to check both the instruction cache(s) and the decoded instruction cache. The fetch unit is operable to receive the determined next instruction pointers from the fetch queue, fetch the instructions identified by the next instruction pointers from the fetch queue, and provide the fetched instructions to the instruction cache(s) and/or the decode unit. The decode unit is operable to receive the fetched instructions, decode them into one or more corresponding decoded instructions, and provide the one or more corresponding decoded instructions to the decoded instruction queue.

The decoded instruction cache 333 is operable to cache (e.g., store) previously decoded instructions (e.g., there may be a line which is not shown from the output of the decode unit or from the decoded instruction queue to the input of the decoded instruction cache). The decoded instruction cache is operable to receive the determined next instruction pointers from the fetch queue and provided decoded instructions corresponding to instructions identified by the next instruction pointers to the decoded instruction queue. When these decoded instructions are cached in the decoded instruction cache, they may be output directly without having to re-decode the instructions, which may help to save time and/or improve performance. For clarity, as used herein identifying and outputting decoded instructions from the decoded instruction cache represents a form of decoding instructions. Examples of suitable decoded instruction caches include, but are not limited to, decoded stream buffers (DSBs) and instruction marker caches. If the instruction is not in the instruction cache(s) or reflected in the decoded instruction cache then the fetch unit may fetch the instruction from other cache(s) or from system memory.

Referring again to **FIG. 3****,** the back end unit 314 coupled with the front end unit. For example, an input of the back end unit is coupled with the output of the decoded instruction queue 335. The back end unit may be similar to or the same as those already described for the back end unit 114 of **FIG. 1****.** The back end unit is operable to receive the decoded instructions from the decoded instruction queue and execute the decoded instructions to generate results. The back end unit may either execute instructions in-order or out-of-order.

Now, as previously mentioned, it tends to be challenging for the front end unit to be able to consistently fetch and decode enough instructions to keep the back end unit sufficiently busy and/or not idle. This tends to be especially the case when the back end unit has a wide pipeline and/or a deep pipeline. The wide pipeline may allow multiple instructions to be processed in parallel. The deep pipeline may allow multiple instructions to be in different phases of execution at the same time to increase the amount of parallelism. Such wider and/or deeper pipelines tend to consume more instructions at a time. This places more demand load on the front end unit to fetch and decode more instructions per unit time to keep the back end unit busy and/or not idle.

To help address this challenge, the front end unit may attempt to aggressively run far ahead of the back end unit by fetching and decoding instructions well in advance of when they are needed. Conventionally, this has been done along a single in-order sequence or path of instructions (i.e., corresponding to the first (e.g., main) in-order sequence of instructions) that is based on a single context (e.g., context stored in the context storage 327). However, the front end unit and/or the branch prediction unit are not perfect. Events like flushes due to miss-predicted branch directions and/or misses in the instruction cache(s) may cause the fetch and decode of younger instructions to be stalled behind older instructions facing these events. For example, if a conditional branch is miss-predicted, the front end unit and/or the branch predictor may need to flush the pipeline, rewind back to the miss-predicted conditional branch, and begin fetching new or different instructions along the miss-predicted branch direction path. This miss-predicted path is not along the single in-order sequence or path of instructions so its instructions will typically not have already been fetched and decoded yet. Moreover, the longer the single in-order sequence or path of instructions, generally the greater the likelihood of a conditional branch direction being miss-predicted somewhere along the single in-order sequence or path of instructions, and therefore also generally the greater the likelihood the processor will need to flush the pipeline, rewind back to the miss-predicated conditional branch, and fetch and decode new instructions along the correct path. Furthermore, there is also a greater likelihood that some of the instructions fetched by aggressively running far ahead of the back end unit will be removed from the instruction cache(s) 331 before the time when they are needed. Thus, there are limits on the ability of the front end unit and/or the branch prediction unit to aggressively run increasingly farther ahead of the back end unit along a single in-order sequence or path of instructions. Also, the increased likelihood of miss-predicted branches resulting from such aggressive run ahead along the single in-order sequence or path of instructions may tend limit the performance of the processor and increase its power consumption.

Referring again to **FIG. 3****,** the front end unit also includes circuitry or other logic 340 to control the front end unit to fetch and decode a second in-order sequence of instructions in parallel with a first in-order sequence of instructions. The circuitry or other logic is coupled with the next instruction pointer 325, the fetch queue 328, the instruction fetch and decode unit 329, and the decoded instruction queue 335. The circuitry or other logic may be implemented in hardware (e.g., integrated circuitry, transistors or other circuit elements, etc.), firmware (e.g., ROM, EPROM, flash memory, or other persistent or non-volatile memory and microcode, microinstructions, or other lower-level instructions stored therein), software (e.g., higher-level instructions stored in memory), or a combination thereof (e.g., hardware potentially combined with one or more of firmware and/or software).

**FIG. 4** is a block diagram of an embodiment of a processor 400 having a detailed example embodiment of front end unit 413 having a detailed example embodiment of circuitry 440 to control the front end unit to fetch and decode a second (e.g., reconvergent) in-order sequence of instructions in parallel with a first (e.g., main) in-order sequence of instructions.

The front end unit includes a next instruction pointer determination unit 425, a fetch queue 428, an instruction fetch and decode unit 429, and a decoded instruction queue 435. The next instruction pointer determination unit includes a branch prediction unit 426 and branch prediction context storage 427. The instruction fetch and decode unit includes a fetch unit 430, one or more instruction caches 431, a decode unit 432, and a decoded instruction cache 433. Aside from the interactions of these components with the circuitry or other logic 440, which will be discussed further below, the components of the front end unit 413 may optionally be the same as or similar to (e.g., have any one or more characteristics that are the same as or similar to) the correspondingly named components of the front end 313 of **FIG. 3****.** To avoid obscuring the description, the different and/or additional characteristics and aspects of the front end unit 413 will primarily be described, without repeating all the characteristics which may optionally be the same or similar to those already described for the front end 313.

The circuitry or other logic 440 to control the front end unit to fetch and decode the second (e.g., reconvergent) in-order sequence of instructions in parallel with the first (e.g., main) in-order sequence of instructions includes an optional second (e.g., reconvergent) sequence history unit 450, at least one second (e.g., reconvergent) sequence decoded instruction queue 447, a second (e.g., reconvergent) sequence activation unit 446, and one or more second (e.g., reconvergent) sequence context storage 445. These components may each irrespective of the others be implemented in hardware (e.g., integrated circuitry, transistors or other circuit elements, etc.), firmware (e.g., ROM, EPROM, flash memory, or other persistent or non-volatile memory and microcode, microinstructions, or other lower-level instructions stored therein), software (e.g., higher-level instructions stored in memory), or a combination thereof (e.g., hardware potentially combined with one or more of firmware and/or software).

In some embodiments, the second sequence history unit 450 may optionally be included to allow controlling the front end unit to fetch and decode on only a subset of all possible second in-order sequences of instructions (e.g., for which there is more benefit in fetching and decoding them). For example, the second sequence history unit may optionally be included to allow controlling the front end unit to fetch and decode second sequences corresponding to only a subset of all possible return target instructions or other reconvergent instructions. The optional second sequence history unit is coupled with an output of the decoded instruction queue 435 to receive copies of instruction pointers 452 provided from the decoded instruction queue to the back end unit 414. The second sequence history unit may use these instruction pointers 452 for training. For example, it may be operative to collect and maintain history information associated with second sequences. For example, the second sequence history unit may be operative to collect and maintain history information associated with second sequences corresponding to return target instructions or other reconvergent instructions.

In some embodiments, the history information may include performance and/or inefficiency information associated with the candidate second sequences. For example, the performance and/or inefficiency information may include stall and/or bubble information corresponding to the candidate second sequences (e.g., the number of stall cycles and/or bubbles experienced by the front end unit within a certain window (e.g., certain number of instructions) after receiving an instruction pointer for a return target instruction or other reconvergent instruction). Such stall cycles and/or bubbles may occur, for example, when there are misses in the one or more instruction caches 431 and the decoded instruction cache 433. Large program codes often may have from many hundreds to many thousands of return target instructions. Front end units may experience better performance and/or efficiency (e.g., less stalls and/or bubbles) stalls for some of these return target instructions than others. Without limitation, this may be due to various factors, such as, for example, how far away the return target instruction is from the corresponding call instruction. Accordingly, in some embodiments, the optional second sequence history unit may help to allow selectively controlling the fetching and decoding for a subset of second sequences whose corresponding return target instructions exhibit more inefficiencies (e.g., more stall cycles and/or bubbles withing a certain number of instructions after the return target instructions).

Based on such history information, the second sequence history unit may maintain instruction pointers for a subset 451 of second in-order sequences of instructions (e.g., instruction pointers for a subset of return target instructions or other reconvergent instructions that are the first occurring instructions of corresponding second sequences to be fetched and decoded). For example, the subset of second sequences may represent instruction pointers for a subset of all fetched and decoded return target instructions or other reconvergent instructions for which the back end unit has larger stall times prior to execution of decoded instructions corresponding to the reconvergent instructions and/or some or all their corresponding second sequences. The second sequence history unit may create and dynamically update the subset of second sequences during runtime (e.g., replace prior return target instructions with newly encountered return target instructions associated with greater inefficiencies) to effectively "learn" the subset of second in-order sequences of instructions to fetch and decode that offer greater performance enhancements.

The scope of the invention is not limited to the size of the subset 451 of second in-order sequences of instructions. The subset may range from a smaller fraction to a larger fraction of all possible such second sequences depending upon the objectives of the particular implementation. By way of example, the subset of second sequences may range from around 32 to 2048, or from 64 to 1024, or from 64 to 512, or from 128 to 512 of the top second sequences experiencing the greatest stall cycles and/or bubbles. The number is not limited to a power-of-two number, although in some cases they may be convenient for implementation purposes.

The subset 451 of second sequences may be implemented in different ways in different embodiments. Examples of possible ways include, but are not limited to, caching structures, lists, tables, data structures, history tracking structures, and the like. As one specific illustrative example, the subset of second sequences may optionally be implemented as a set associative cache with a number of entries equal to the number of second sequences in the subset of second sequences. Each entry may include a field for a tag (e.g., a 16-bit tag) for an instruction pointer corresponding to the first instruction and a field for a counter (e.g., a 12-bit counter) that increments (or decrements) on stall cycles and/or bubbles. The entries may be dynamically updated or overwritten during runtime when second sequences associated with more stall cycles or bubbles are encountered.

Referring again to **FIG. 4****,** the front end unit also includes the at least one second sequence decoded instruction queue 447. In some embodiments, there may optionally be multiple second sequence decoded instruction queues, such as, for example, from about 10 to 100 or more, although the scope of the invention is not limited to any known number. In some embodiments, each of the at least one second sequence decoded instruction queue may be implemented as a first in, first out (FIFO) queue. In some embodiments, each of the at least one second sequence decoded instruction queue may be implemented similarly to an instruction dispatch queue (e.g., although often smaller). Each of the at least one second sequence decoded instruction queue may be used to store decoded instructions of a corresponding second in-order sequence of instructions. Typically, each second sequence decoded instruction queue will not store decoded instructions of the first (e.g., main) in-order sequence of instructions, which may instead be stored in the decoded instruction queue 435.

Initially, decoded instructions of the corresponding second in-order sequence of instructions may be added to or stored in each corresponding second sequence decoded instruction queue. The second sequence history unit 450 is coupled with the second sequence activation unit 446. The second sequence activation unit 446 may monitor the next instruction pointer output from the next instruction pointer determination unit 425. When this next instruction pointer matches or otherwise corresponds to an instruction pointer of the subset 451 of second in-order sequences of instructions, then the second sequence activation unit 446 may signal or indicate that decoded instructions of the corresponding second in-order sequence of instructions are to be added to or stored in a corresponding second sequence decoded instruction queue 447. The second sequence activation unit 446 is coupled with the at least one second sequence decoded instruction queue 447, the next instruction pointer determination unit 425, and the at least one second sequence context storage 445.

The second sequence activation unit 446 may activate a free or available one of the at least one second sequence decoded instruction queue 447 (if one is free or available) to store decoded instructions of the associated second in-order sequence of instructions. The second sequence activation unit may also activate the next instruction pointer determination unit 425 to output a next instruction pointer for the first occurring instruction (e.g., the first occurring instruction 110 in **FIG. 1****,** the instruction_c in **FIG. 2**) of the second in-order sequence of instructions. Thereafter, the next instruction pointer determination unit may increment the next instruction pointer to indicate subsequent instructions of the second in-order sequence of instructions. These next instruction pointers may be stored in the fetch queue 428. The instruction fetch and decode unit 429 may receive these next instruction pointers from the fetch queue and may process these next instruction pointers similarly to what was described above for **FIG. 3****.** For example, the fetch unit 430 may fetch the associated instructions and the decode unit 432 may decode them, or else decoded instructions for the next instruction pointers may be output from the decoded instruction cache 433. The decoded instructions 448 for these next instruction pointers of the second in-order sequence of instructions output from the instruction fetch and decode unit may be stored in the corresponding activated second sequence decoded instruction queue 447.

In some embodiments, this process may continue with the fetching and decoding of instructions of the activated second in-order sequence of instructions until decoded instructions for a given number (e.g., configurable number, a predetermined number, or a fixed number) of instructions of the activated second in-order sequence of instructions have been stored in the associated second sequence decoded instruction queue 447, and then the fetch and decode of the activated second in-order sequence of instructions may optionally stop. In one aspect, the given number may be controlled based on the given number or information indicative of the given number stored in a control and/or configuration register (not shown). In various embodiments, the given number may range from about 5 to about 300, or from about 10 to about 200, or from about 15 to about 100, or from about 20 to about 80 instructions, or from about 30 to about 70 instructions although the scope of the invention is not limited to any known number. In some embodiments, the second sequence decoded instruction queue may have a different entry for each such instruction. In some embodiments, each entry may have a tag field to store a tag to identify the instruction pointer (e.g., a 32-bit tag field), a field for a decoded instruction identifier (e.g., a 16-bit field for a decoded micro-operation).

In some embodiments, in the next instruction pointer determination unit 425, the fetch queue 428, and the instruction fetch and decode unit 429 may process instructions into the second sequence decoded instruction queue 447 opportunistically when the front end unit would be idle or at least less busy fetching and decoding instructions for the first (e.g., main) in-order sequence of instructions. For example, this may be the case in situations like a post-flush, an instruction translation lookaside buffer (TLB) miss, when the decoded instruction queue 435 is full, when the back end unit is catching up with the front end unit, or the like.

The second sequence activation unit 446 may also activate one of the at least one second sequence context storage 445. For example, the branch prediction unit 426 may include a sequence of linear instruction pointers. The circuitry 440 may sniff or otherwise examine the linear instruction pointers in the branch prediction unit and compare them with the subset of second sequences and thereby determine when to start creating a new context and fetching and decoding the second set of instructions. In some embodiments, there may optionally be multiple second sequence context storage, such as, for example, from about 2 to about 20, or from about 4 to about 10, although the scope of the invention is not limited to any known number. The activated second sequence context storage may begin to store context or stew (e.g., branch prediction context) used to fetch instructions of the associated second in-order sequence of instructions. By way of example, each context or stew may be stored in several hundred bits, such as, for example, 512-bits. This context or stew may be used to predict the directions of conditional branch instructions in the second in-order sequence of instructions. This may affect how the next instruction pointer is incremented or changed while progressing through conditional branch instructions in the second in-order sequence of instructions. The activated second sequence context storage and the context stored therein may be separate and distinct from the branch prediction context storage 427 and the context stored therein such that two different and distinct contexts may be maintained in their respective context storages. Once the activated second sequence decoded instruction queue 447 has been sufficiently filled (e.g., the given number of instructions have been stored therein), the associated activated second sequence context storage 445 may optionally be deallocated or freed and optionally cleared so that it can be subsequently reused for another second in-order sequence of instructions.

The decoded instructions for the second in-order sequence of instructions may be stored or retained in the associated second sequence decoded instruction queue 447 until they are needed. Then, these decoded instructions 449 may be streamed or otherwise output from the second sequence decoded instruction queue to the decoded instruction queue 435. Each of the at least one second sequence decoded instruction queue 447 may be coupled with an output of the fetch queue 428 to receive a next instruction pointer 453 (e.g., a linear instruction pointer). The next instruction pointer 453 may be used to check each of the at least one second sequence decoded instruction queue 447 (e.g., check for a tag match). This check may be performed in parallel with the check of the next instruction pointer 453 in the one or more instruction caches 431 and the decoded instruction cache 433 previously described.

When the next instruction pointer 453 is present at the top of a second sequence decoded instruction queue 447, then decoded instructions 449 may be streamed or otherwise output from the second sequence decoded instruction queue 447 to the decoded instruction queue 435. Having these decoded instructions already in the second sequence decoded instruction queue 447 may help to avoid the stall cycles, bubbles, or other inefficiencies that may be experienced if the circuitry or other logic 430 was not utilized. Also, since decoded instructions are stored in the second sequence decoded instruction queue, they may be often output with relatively low latencies (e.g., lower latencies than if instructions were fetched from an instruction cache and then decoded). An alternate embodiment is also contemplated where instead of using the second sequence history unit 450, more of the second sequence decoded instruction queues 447 may optionally be included and used for all second sequences (e.g., not just a subset of them). However, it may often be the case that a subset of second sequences cause more stalls than others such that it may often be convenient to include the second sequence history unit to determine the subsets.

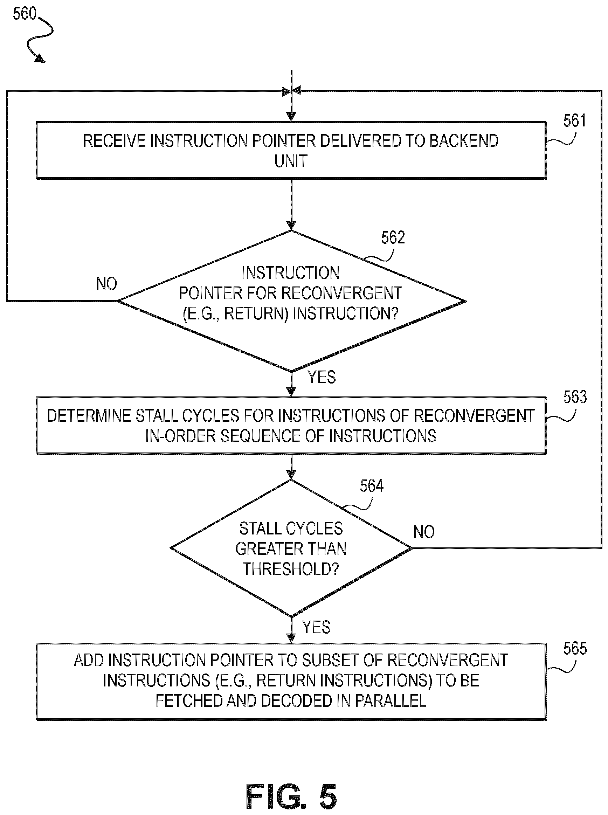

**FIG. 5** is a block flow diagram of an embodiment of a method 560 of determining instruction pointers for a subset of reconvergent instructions (e.g., return instructions) for second in-order sequences of instructions to be fetched and decoded in parallel with first in-order sequences of instructions. The method includes receiving an instruction pointer delivered to a backend unit (e.g., the instruction pointer 452), at block 561. At block 562, a determination may be made whether the received instruction pointer is for a reconvergent instruction (e.g., a return instruction). If the instruction pointer is not for a reconvergent instruction (i.e., "NO" is the determination), then the method may return to block 561 (e.g., where a next instruction pointer may be received). Alternatively, if the instruction pointer is for a reconvergent instruction (i.e., "YES" is the determination), then the method may advance to block 563. At block 563, stall cycles (e.g., a number of stall cycles) for instructions of a reconvergent in-order sequence of instructions may be determined. For example, a total number of stall cycles encountered in fetching and decoding a predetermined number of instructions (e.g., 10, 15, 20, 25, or some other number of instructions) after a return instruction may be summed. At block 564, a determination may be made whether the determined stall cycles (e.g., a number of stall cycles) is greater than a threshold. This may be done in different ways in different embodiments. In some embodiments, the threshold may be a fixed, configurable, or otherwise predetermined number of stall cycles. In other embodiments, the threshold may be based on the numbers of stall cycles corresponding to other reconvergent instructions. For example, a subset of reconvergent instructions experiencing the greatest stall cycles may be maintained, and the determined stall cycles may be compared to the stall cycles in the subset to see if it is great enough to be added to the subset. Over time, the subset may reflect those reconvergent instructions encountering the largest stall cycles. If the determined stall cycles are not greater than the threshold (i.e., "NO" is the determination), then the method may return to block 561 (e.g., where a next instruction pointer may be received). Alternatively, if the determined stall cycles are greater than the threshold (i.e., "YES" is the determination), then the method may advance to block 565. At block 565, the instruction pointer (e.g., the one received at block 561) may be added to a set of instruction pointers for a subset of reconvergent instructions (e.g., return instructions) to be fetched and decoded in parallel with first in-order sequences of instructions. For example, the instruction pointer may be added to the subset 451.

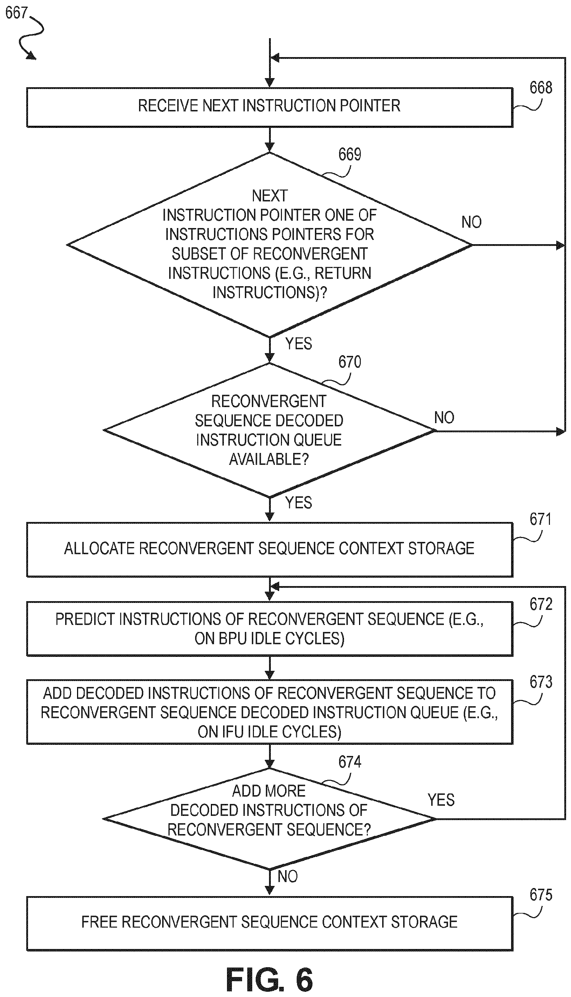

**FIG. 6** is a block flow diagram of an embodiment of a method 667 of storing decoded instructions of a reconvergent sequence in a decoded instruction queue (e.g., the at least one second sequence decoded instruction queue 447). The method includes receiving a next instruction pointer delivered to a backend unit (e.g., the instruction pointer 452), at block 668. At block 669, a determination may be made whether the received next instruction pointer is one of the instruction pointers for a subset of reconvergent instructions (e.g., return instructions). For example, this may include determining whether the received next instruction pointer is in the subset 451. If the next instruction pointer is not one of the instruction pointers for the subset of reconvergent instructions (i.e., "NO" is the determination), then the method may return to block 668 (e.g., where a next instruction pointer may be received). Alternatively, if the instruction pointer is one of the instruction pointers for the subset of reconvergent instructions (i.e., "YES" is the determination), then the method may advance to block 670. At block 670, a determination may be made whether a reconvergent sequence decoded instruction queue (e.g., one of the at least one second sequence decoded instruction queue 447) is free or available. If none are available (i.e., "NO" is the determination), then the method may return to block 668 (e.g., where a next instruction pointer may be received). Alternatively, if one is available (i.e., "YES" is the determination), then the method may advance to block 671. At block 671, a reconvergent sequence context storage (e.g., one of the at least one second sequence context storage 445) may be allocated. At block 672, instructions of the reconvergent sequence may be predicted. This may optionally be done on cycles when the BPU is idle or at least otherwise would be less busy. At block 673, decoded instructions of the reconvergent sequence may be added to the free or available reconvergent sequence decoded instruction queue. This may optionally be done on cycles when the instruction fetch and decode unit (IFU) is idle or at least otherwise would be less busy. At block 674, a determination may be made whether to add more decoded instructions of the reconvergent sequence to the reconvergent sequence decoded instruction queue. If so (i.e., "YES" is the determination), then the method may return to block 672 (e.g., where it may predict additional instructions). If not (i.e., "NO" is the determination), then the method may advance to block 675. At block 675, the reconvergent sequence context storage may be freed.

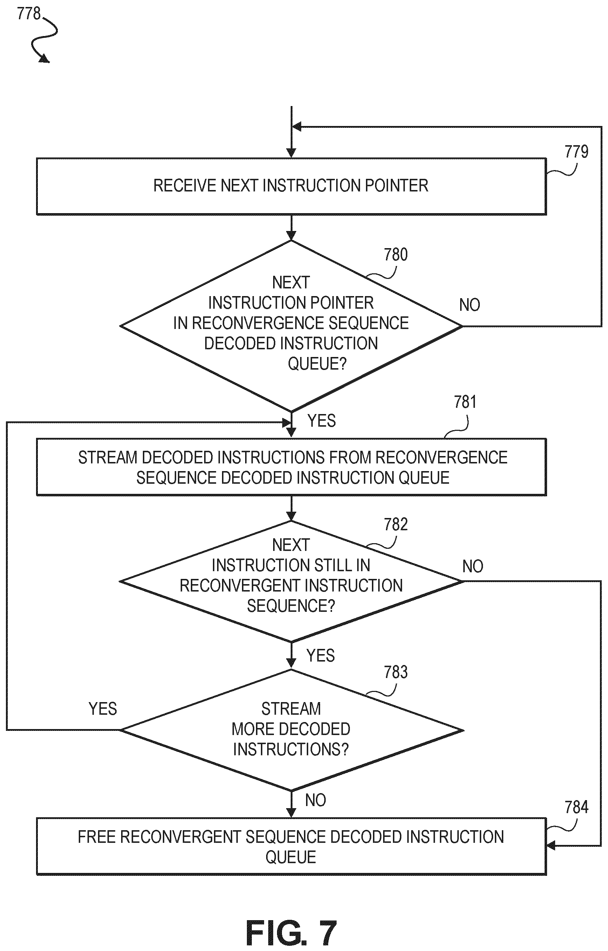

**FIG. 7** is a block flow diagram of an embodiment of a method 778 of streaming or outputting decoded instructions from a reconvergent sequence from a decoded instruction queue (e.g., the at least one second sequence decoded instruction queue 447). The method includes receiving a next instruction pointer (e.g., an instruction pointer output from the fetch queue 428), at block 779. At block 780, a determination may be made whether the received instruction pointer is in a reconvergent sequence decoded instruction queue (e.g., one of the at least one second sequence decoded instruction queue 447). If not (i.e., "NO" is the determination), then the method may return to block 779 (e.g., where a next instruction pointer may be received). If so (i.e., "YES" is the determination), then the method may advance to block 781. At block 781, decoded instructions may be streamed or otherwise output from the reconvergent sequence decoded instruction queue. For example, they may be stored to the decoded instruction queue 435. At block 782, a determination may be made whether the next instruction is still in the reconvergent instruction sequence. If not (i.e., "NO" is the determination), then the method may advance to block 784. If so (i.e., "YES" is the determination), then the method may advance to block 783. At block 783, a determination may be made whether to stream or output more decoded instructions from the reconvergent sequence decoded instruction queue. In some embodiments, only a given number of instructions (e.g., a configurable, predetermined, or fixed number of instructions) may be streamed. If so (i.e., "YES" is the determination), then the method may return to block 781 (e.g., where more decoded instructions may be streamed or output). If not (i.e., "NO" is the determination), then the method may advance to block 784. At block 784, the reconvergent sequence decoded instruction queue may be freed or made available.

The methods of **FIGs. 5-7** have been described in a relatively basic form, but operations may optionally be added to and/or removed from the methods. In addition, while the flow diagrams show a particular order of operations according to embodiments, that order is exemplary. Alternate embodiments may perform certain operations in different order, combine certain operations, overlap certain operations, etc.

In various embodiments, the methods of **FIGs. 5-7** may be performed by and/or with the processor 100 of **FIG. 1****,** the processor 300 of **FIG. 3****,** or the processor 400 of **FIG. 4****.** The components, features, and specific optional details described herein for the processors 100, 300, 400 may also optionally apply to the methods of **FIGs. 5-7****.** Alternatively, the methods of **FIGs. 5-7** may be performed by and/or with similar or different processors. Moreover, the processors 100, 300, 400 may perform methods the same as, similar to, or different than the methods of **FIGs. 5-7****.**

### Example Computer Architectures.

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

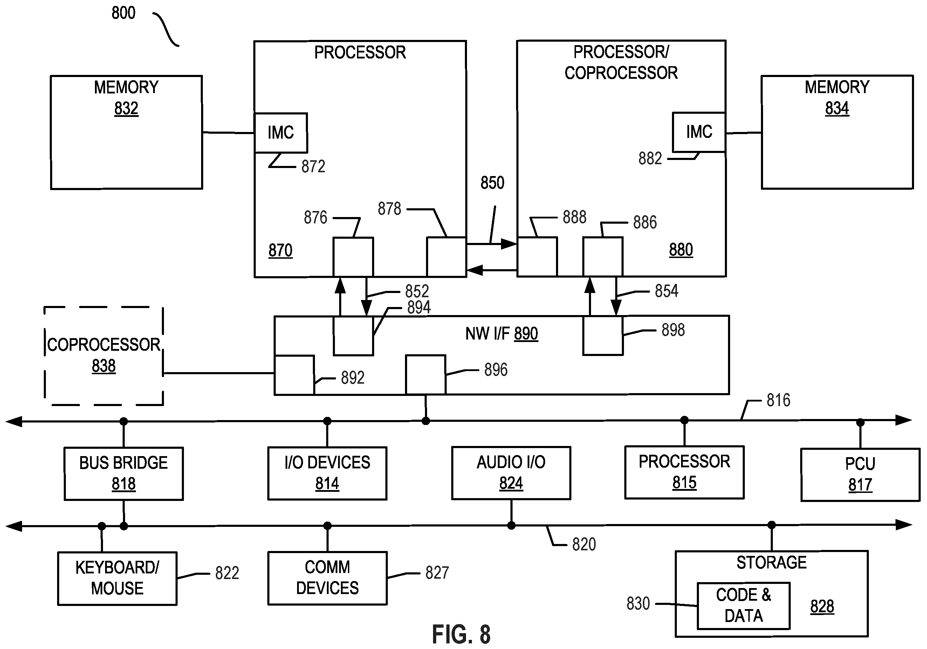

**FIG. 8** illustrates an example computing system. Multiprocessor system 800 is an interfaced system and includes a plurality of processors or cores including a first processor 870 and a second processor 880 coupled via an interface 850 such as a point-to-point (P-P) interconnect, a fabric, and/or bus. In some examples, the first processor 870 and the second processor 880 are homogeneous. In some examples, first processor 870 and the second processor 880 are heterogenous. Though the example system 800 is shown to have two processors, the system may have three or more processors, or may be a single processor system. In some examples, the computing system is a system on a chip (SoC).

Processors 870 and 880 are shown including integrated memory controller (IMC) circuitry 872 and 882, respectively. Processor 870 also includes interface circuits 876 and 878; similarly, second processor 880 includes interface circuits 886 and 888. Processors 870, 880 may exchange information via the interface 850 using interface circuits 878, 888. IMCs 872 and 882 couple the processors 870, 880 to respective memories, namely a memory 832 and a memory 834, which may be portions of main memory locally attached to the respective processors.

Processors 870, 880 may each exchange information with a network interface (NW I/F) 890 via individual interfaces 852, 854 using interface circuits 876, 894, 886, 898. The network interface 890 (e.g., one or more of an interconnect, bus, and/or fabric, and in some examples is a chipset) may optionally exchange information with a coprocessor 838 via an interface circuit 892. In some examples, the coprocessor 838 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 870, 880 or outside of both processors, yet connected with the processors via an interface such as P-P interconnect, such that either or both processors' local cache information may be stored in the shared cache if a processor is placed into a low power mode.

Network interface 890 may be coupled to a first interface 816 via interface circuit 896. In some examples, first interface 816 may be an interface such as a Peripheral Component Interconnect (PCI) interconnect, a PCI Express interconnect or another I/O interconnect. In some examples, first interface 816 is coupled to a power control unit (PCU) 817, which may include circuitry, software, and/or firmware to perform power management operations with regard to the processors 870, 880 and/or co-processor 838. PCU 817 provides control information to a voltage regulator (not shown) to cause the voltage regulator to generate the appropriate regulated voltage. PCU 817 also provides control information to control the operating voltage generated. In various examples, PCU 817 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 817 is illustrated as being present as logic separate from the processor 870 and/or processor 880. In other cases, PCU 817 may execute on a given one or more of cores (not shown) of processor 870 or 880. In some cases, PCU 817 may be implemented as a microcontroller (dedicated or general-purpose) or other control logic configured to execute its own dedicated power management code, sometimes referred to as P-code. In yet other examples, power management operations to be performed by PCU 817 may be implemented externally to a processor, such as by way of a separate power management integrated circuit (PMIC) or another component external to the processor. In yet other examples, power management operations to be performed by PCU 817 may be implemented within BIOS or other system software.

Various I/O devices 814 may be coupled to first interface 816, along with a bus bridge 818 which couples first interface 816 to a second interface 820. In some examples, one or more additional processor(s) 815, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 816. In some examples, second interface 820 may be a low pin count (LPC) interface. Various devices may be coupled to second interface 820 including, for example, a keyboard and/or mouse 822, communication devices 827 and storage circuitry 828. Storage circuitry 828 may be one or more non-transitory machine-readable storage media as described below, such as a disk drive or other mass storage device which may include instructions/code and data 830 and may implement the storage 'ISAB03 in some examples. Further, an audio I/O 824 may be coupled to second interface 820. Note that other architectures than the point-to-point architecture described above are possible. For example, instead of the point-to-point architecture, a system such as multiprocessor system 800 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

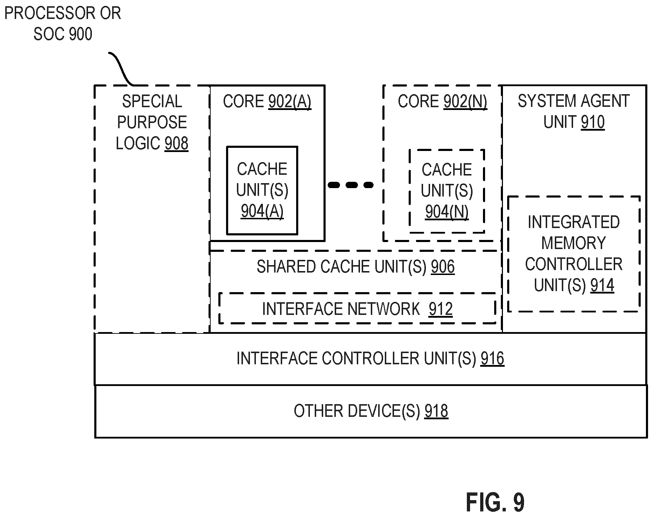

**FIG. 9** illustrates a block diagram of an example processor and/or SoC 900 that may have one or more cores and an integrated memory controller. The solid lined boxes illustrate a processor 900 with a single core 902(A), system agent unit circuitry 910, and a set of one or more interface controller unit(s) circuitry 916, while the optional addition of the dashed lined boxes illustrates an alternative processor 900 with multiple cores 902(A)-(N), a set of one or more integrated memory controller unit(s) circuitry 914 in the system agent unit circuitry 910, and special purpose logic 908, as well as a set of one or more interface controller units circuitry 916. Note that the processor 900 may be one of the processors 870 or 880, or co-processor 838 or 815 **of** **FIG. 8****.**

Thus, different implementations of the processor 900 may include: 1) a CPU with the special purpose logic 908 being integrated graphics and/or scientific (throughput) logic (which may include one or more cores, not shown), and the cores 902(A)-(N) being one or more general purpose cores (e.g., general purpose in-order cores, general purpose out-of-order cores, or a combination of the two); 2) a coprocessor with the cores 902(A)-(N) being a large number of special purpose cores intended primarily for graphics and/or scientific (throughput); and 3) a coprocessor with the cores 902(A)-(N) being a large number of general purpose in-order cores. Thus, the processor 900 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 900 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 904(A)-(N) within the cores 902(A)-(N), a set of one or more shared cache unit(s) circuitry 906, and external memory (not shown) coupled to the set of integrated memory controller unit(s) circuitry 914. The set of one or more shared cache unit(s) circuitry 906 may include one or more mid-level caches, such as level 2 (L2), level 3 (L3), level 4 (L4), or other levels of cache, such as a last level cache (LLC), and/or combinations thereof. While in some examples interface network circuitry 912 (e.g., a ring interconnect) interfaces the special purpose logic 908 (e.g., integrated graphics logic), the set of shared cache unit(s) circuitry 906, and the system agent unit circuitry 910, alternative examples use any number of well-known techniques for interfacing such units. In some examples, coherency is maintained between one or more of the shared cache unit(s) circuitry 906 and cores 902(A)-(N). In some examples, interface controller units circuitry 916 couple the cores 902 to one or more other devices 918 such as one or more I/O devices, storage, one or more communication devices (e.g., wireless networking, wired networking, etc.), etc.

In some examples, one or more of the cores 902(A)-(N) are capable of multi-threading. The system agent unit circuitry 910 includes those components coordinating and operating cores 902(A)-(N). The system agent unit circuitry 910 may include, for example, power control unit (PCU) circuitry and/or display unit circuitry (not shown). The PCU may be or may include logic and components needed for regulating the power state of the cores 902(A)-(N) and/or the special purpose logic 908 (e.g., integrated graphics logic). The display unit circuitry is for driving one or more externally connected displays.

The cores 902(A)-(N) may be homogenous in terms of instruction set architecture (ISA). Alternatively, the cores 902(A)-(N) may be heterogeneous in terms of ISA; that is, a subset of the cores 902(A)-(N) may be capable of executing an ISA, while other cores may be capable of executing only a subset of that ISA or another ISA.

### Example Core Architectures - In-order and out-of-order core block diagram.

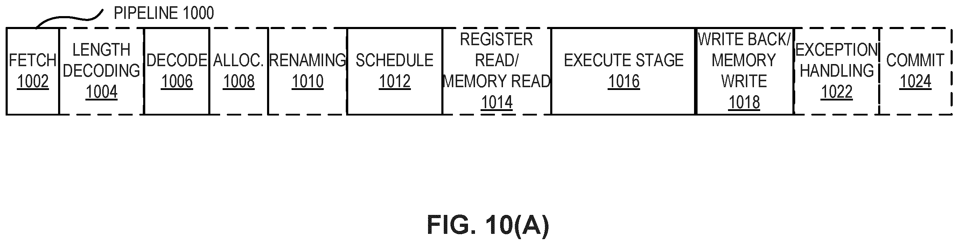

**FIG. 10(A)** is a block diagram illustrating both an example in-order pipeline and an example register renaming, out-of-order issue/execution pipeline according to examples. **FIG. 10(B)** is a block diagram illustrating both an example in-order architecture core and an example register renaming, out-of-order issue/execution architecture core to be included in a processor according to examples. The solid lined boxes in **FIGS. 10(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 10(A)****,** a processor pipeline 1000 includes a fetch stage 1002, an optional length decoding stage 1004, a decode stage 1006, an optional allocation (Alloc) stage 1008, an optional renaming stage 1010, a schedule (also known as a dispatch or issue) stage 1012, an optional register read/memory read stage 1014, an execute stage 1016, a write back/memory write stage 1018, an optional exception handling stage 1022, and an optional commit stage 1024. One or more operations can be performed in each of these processor pipeline stages. For example, during the fetch stage 1002, one or more instructions are fetched from instruction memory, and during the decode stage 1006, the one or more fetched instructions may be decoded, addresses (e.g., load store unit (LSU) addresses) using forwarded register ports may be generated, and branch forwarding (e.g., immediate offset or a link register (LR)) may be performed. In one example, the decode stage 1006 and the register read/memory read stage 1014 may be combined into one pipeline stage. In one example, during the execute stage 1016, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of **FIG. 10(B)** may implement the pipeline 1000 as follows: 1) the instruction fetch circuitry 1038 performs the fetch and length decoding stages 1002 and 1004; 2) the decode circuitry 1040 performs the decode stage 1006; 3) the rename/allocator unit circuitry 1052 performs the allocation stage 1008 and renaming stage 1010; 4) the scheduler(s) circuitry 1056 performs the schedule stage 1012; 5) the physical register file(s) circuitry 1058 and the memory unit circuitry 1070 perform the register read/memory read stage 1014; the execution cluster(s) 1060 perform the execute stage 1016; 6) the memory unit circuitry 1070 and the physical register file(s) circuitry 1058 perform the write back/memory write stage 1018; 7) various circuitry may be involved in the exception handling stage 1022; and 8) the retirement unit circuitry 1054 and the physical register file(s) circuitry 1058 perform the commit stage 1024.

**FIG. 10(B)** shows a processor core 1090 including front-end unit circuitry 1030 coupled to execution engine unit circuitry 1050, and both are coupled to memory unit circuitry 1070. The core 1090 may be a reduced instruction set architecture computing (RISC) core, a complex instruction set architecture computing (CISC) core, a very long instruction word (VLIW) core, or a hybrid or alternative core type. As yet another option, the core 1090 may be a special-purpose core, such as, for example, a network or communication core, compression engine, coprocessor core, general purpose computing graphics processing unit (GPGPU) core, graphics core, or the like.

The front-end unit circuitry 1030 may include branch prediction circuitry 1032 coupled to instruction cache circuitry 1034, which is coupled to an instruction translation lookaside buffer (TLB) 1036, which is coupled to instruction fetch circuitry 1038, which is coupled to decode circuitry 1040. In one example, the instruction cache circuitry 1034 is included in the memory unit circuitry 1070 rather than the front-end circuitry 1030. The decode circuitry 1040 (or decoder) may decode instructions, and generate as an output one or more micro-operations, microcode entry points, microinstructions, other instructions, or other control signals, which are decoded from, or which otherwise reflect, or are derived from, the original instructions. The decode circuitry 1040 may further include address generation unit (AGU, not shown) circuitry. In one example, the AGU generates an LSU address using forwarded register ports, and may further perform branch forwarding (e.g., immediate offset branch forwarding, LR register branch forwarding, etc.). The decode circuitry 1040 may be implemented using various different mechanisms. Examples of suitable mechanisms include, but are not limited to, look-up tables, hardware implementations, programmable logic arrays (PLAs), microcode read only memories (ROMs), etc. In one example, the core 1090 includes a microcode ROM (not shown) or other medium that stores microcode for certain macroinstructions (e.g., in decode circuitry 1040 or otherwise within the front-end circuitry 1030). In one example, the decode circuitry 1040 includes a micro-operation (micro-op) or operation cache (not shown) to hold/cache decoded operations, micro-tags, or micro-operations generated during the decode or other stages of the processor pipeline 1000. The decode circuitry 1040 may be coupled to rename/allocator unit circuitry 1052 in the execution engine circuitry 1050.

The execution engine circuitry 1050 includes the rename/allocator unit circuitry 1052 coupled to retirement unit circuitry 1054 and a set of one or more scheduler(s) circuitry 1056. The scheduler(s) circuitry 1056 represents any number of different schedulers, including reservations stations, central instruction window, etc. In some examples, the scheduler(s) circuitry 1056 can include arithmetic logic unit (ALU) scheduler/scheduling circuitry, ALU queues, address generation unit (AGU) scheduler/scheduling circuitry, AGU queues, etc. The scheduler(s) circuitry 1056 is coupled to the physical register file(s) circuitry 1058. Each of the physical register file(s) circuitry 1058 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) circuitry 1058 includes vector registers unit circuitry, writemask registers unit circuitry, and scalar register unit circuitry. These register units may provide architectural vector registers, vector mask registers, general-purpose registers, etc. The physical register file(s) circuitry 1058 is coupled to the retirement unit circuitry 1054 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1054 and the physical register file(s) circuitry 1058 are coupled to the execution cluster(s) 1060. The execution cluster(s) 1060 includes a set of one or more execution unit(s) circuitry 1062 and a set of one or more memory access circuitry 1064. The execution unit(s) circuitry 1062 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1056, physical register file(s) circuitry 1058, and execution cluster(s) 1060 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1064). It should also be understood that where separate pipelines are used, one or more of these pipelines may be out-of-order issue/execution and the rest in-order.

In some examples, the execution engine unit circuitry 1050 may perform load store unit (LSU) address/data pipelining to an Advanced Microcontroller Bus (AMB) interface (not shown), and address phase and writeback, data phase load, store, and branches.

The set of memory access circuitry 1064 is coupled to the memory unit circuitry 1070, which includes data TLB circuitry 1072 coupled to data cache circuitry 1074 coupled to level 2 (L2) cache circuitry 1076. In one example, the memory access circuitry 1064 may include load unit circuitry, store address unit circuitry, and store data unit circuitry, each of which is coupled to the data TLB circuitry 1072 in the memory unit circuitry 1070. The instruction cache circuitry 1034 is further coupled to the level 2 (L2) cache circuitry 1076 in the memory unit circuitry 1070. In one example, the instruction cache 1034 and the data cache 1074 are combined into a single instruction and data cache (not shown) in L2 cache circuitry 1076, level 3 (L3) cache circuitry (not shown), and/or main memory. The L2 cache circuitry 1076 is coupled to one or more other levels of cache and eventually to a main memory.

The core 1090 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In one example, the core 1090 includes logic to support a packed data instruction set architecture extension (e.g., AVX1, AVX2), thereby allowing the operations used by many multimedia applications to be performed using packed data.

### Example Execution Unit(s) Circuitry.

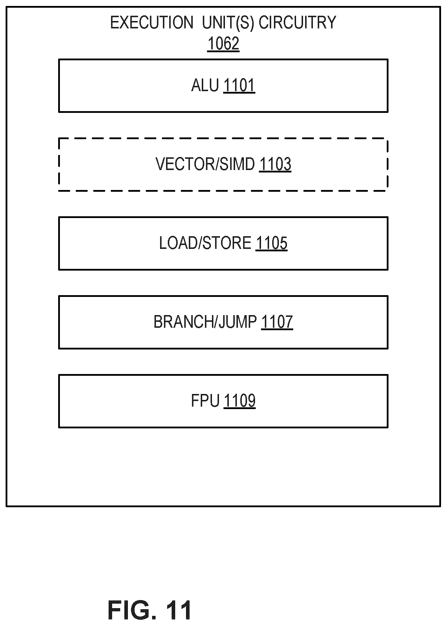

**FIG. 11** illustrates examples of execution unit(s) circuitry, such as execution unit(s) circuitry 1062 of **FIG. 10(B)****.** As illustrated, execution unit(s) circuity 1062 may include one or more ALU circuits 1101, optional vector/single instruction multiple data (SIMD) circuits 1103, load/store circuits 1105, branch/jump circuits 1107, and/or Floating-point unit (FPU) circuits 1109. ALU circuits 1101 perform integer arithmetic and/or Boolean operations. Vector/SIMD circuits 1103 perform vector/SIMD operations on packed data (such as SIMD/vector registers). Load/store circuits 1105 execute load and store instructions to load data from memory into registers or store from registers to memory. Load/store circuits 1105 may also generate addresses. Branch/jump circuits 1107 cause a branch or jump to a memory address depending on the instruction. FPU circuits 1109 perform floating-point arithmetic. The width of the execution unit(s) circuitry 1062 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

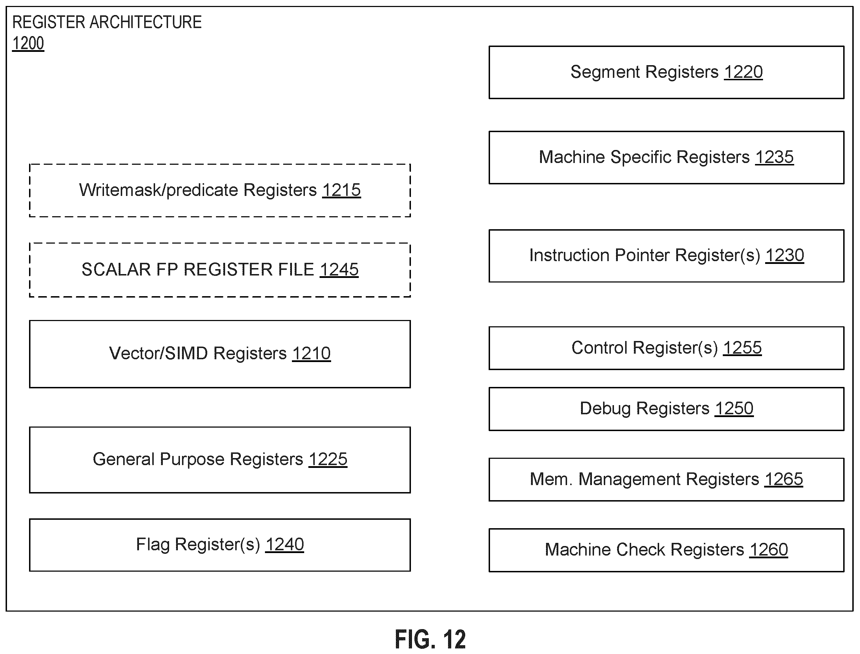

**FIG. 12** is a block diagram of a register architecture 1200 according to some examples. As illustrated, the register architecture 1200 includes vector/SIMD registers 1210 that vary from 128-bit to 1,024 bits width. In some examples, the vector/SIMD registers 1210 are physically 512-bits and, depending upon the mapping, only some of the lower bits are used. For example, in some examples, the vector/SIMD registers 1210 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1200 includes writemask/predicate registers 1215. For example, in some examples, there are 8 writemask/predicate registers (sometimes called k0 through k7) that are each 16-bit, 32-bit, 64-bit, or 128-bit in size. Writemask/predicate registers 1215 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1215 corresponds to a data element position of the destination. In other examples, the writemask/predicate registers 1215 are scalable and consists of a set number of enable bits for a given vector element (e.g., 8 enable bits per 64-bit vector element).

The register architecture 1200 includes a plurality of general-purpose registers 1225. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1200 includes scalar floating-point (FP) register file 1245 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1240 (e.g., EFLAGS, RFLAGS, etc.) store status and control information for arithmetic, compare, and system operations. For example, the one or more flag registers 1240 may store condition code information such as carry, parity, auxiliary carry, zero, sign, and overflow. In some examples, the one or more flag registers 1240 are called program status and control registers.

Segment registers 1220 contain segment points for use in accessing memory. In some examples, these registers are referenced by the names CS, DS, SS, ES, FS, and GS.

Machine specific registers (MSRs) 1235 control and report on processor performance. Most MSRs 1235 handle system-related functions and are not accessible to an application program. Machine check registers 1260 consist of control, status, and error reporting MSRs that are used to detect and report on hardware errors.

One or more instruction pointer register(s) 1230 store an instruction pointer value. Control register(s) 1255 (e.g., CR0-CR4) determine the operating mode of a processor (e.g., processor 870, 880, 838, 815, and/or 900) and the characteristics of a currently executing task. Debug registers 1250 control and allow for the monitoring of a processor or core's debugging operations.

Memory (mem) management registers 1265 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1200 may, for example, be used in register file / memory 'ISAB08, or physical register file(s) circuitry 10 58.

### Instruction set architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

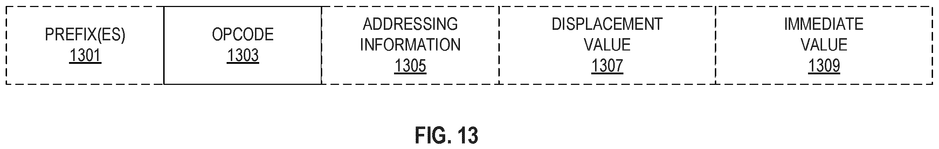

**FIG. 13** illustrates examples of an instruction format. As illustrated, an instruction may include multiple components including, but not limited to, one or more fields for: one or more prefixes 1301, an opcode 1303, addressing information 1305 (e.g., register identifiers, memory addressing information, etc.), a displacement value 1307, and/or an immediate value 1309. Note that some instructions utilize some or all the fields of the format whereas others may only use the field for the opcode 1303. In some examples, the order illustrated is the order in which these fields are to be encoded, however, it should be appreciated that in other examples these fields may be encoded in a different order, combined, etc.

The prefix(es) field(s) 1301, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1303 is used to at least partially define the operation to be performed upon a decoding of the instruction. In some examples, a primary opcode encoded in the opcode field 1303 is one, two, or three bytes in length. In other examples, a primary opcode can be a different length. An additional 3-bit opcode field is sometimes encoded in another field.

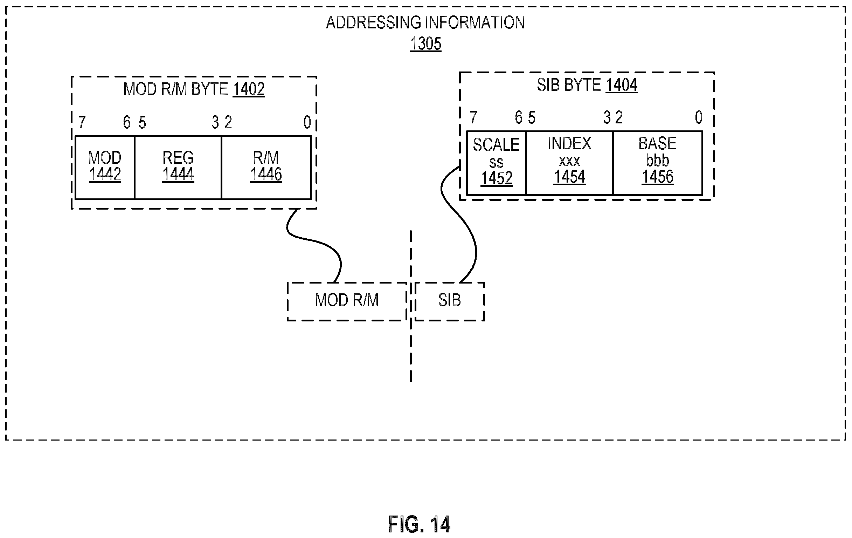

The addressing information field 1305 is used to address one or more operands of the instruction, such as a location in memory or one or more registers. FIG. 14 illustrates examples of the addressing information field 1305. In this illustration, an optional MOD R/M byte 1402 and an optional Scale, Index, Base (SIB) byte 1404 are shown. The MOD R/M byte 1402 and the SIB byte 1404 are used to encode up to two operands of an instruction, each of which is a direct register or effective memory address. Note that both of these fields are optional in that not all instructions include one or more of these fields. The MOD R/M byte 1402 includes a MOD field 1442, a register (reg) field 1444, and R/M field 1446.

The content of the MOD field 1442 distinguishes between memory access and non-memory access modes. In some examples, when the MOD field 1442 has a binary value of 11 (11b), a register-direct addressing mode is utilized, and otherwise a register-indirect addressing mode is used.

The register field 1444 may encode either the destination register operand or a source register operand or may encode an opcode extension and not be used to encode any instruction operand. The content of register field 1444, directly or through address generation, specifies the locations of a source or destination operand (either in a register or in memory). In some examples, the register field 1444 is supplemented with an additional bit from a prefix (e.g., prefix 1301) to allow for greater addressing.

The R/M field 1446 may be used to encode an instruction operand that references a memory address or may be used to encode either the destination register operand or a source register operand. Note the R/M field 1446 may be combined with the MOD field 1442 to dictate an addressing mode in some examples.

The SIB byte 1404 includes a scale field 1452, an index field 1454, and a base field 1456 to be used in the generation of an address. The scale field 1452 indicates a scaling factor. The index field 1454 specifies an index register to use. In some examples, the index field 1454 is supplemented with an additional bit from a prefix (e.g., prefix 1301) to allow for greater addressing. The base field 1456 specifies a base register to use. In some examples, the base field 1456 is supplemented with an additional bit from a prefix (e.g., prefix 1301) to allow for greater addressing. In practice, the content of the scale field 1452 allows for the scaling of the content of the index field 1454 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 1307 provides this value. Additionally, in some examples, a displacement factor usage is encoded in the MOD field of the addressing information field 1305 that indicates a compressed displacement scheme for which a displacement value is calculated and stored in the displacement field 1307.

In some examples, the immediate value field 1309 specifies an immediate value for the instruction. An immediate value may be encoded as a 1-byte value, a 2-byte value, a 4-byte value, etc.

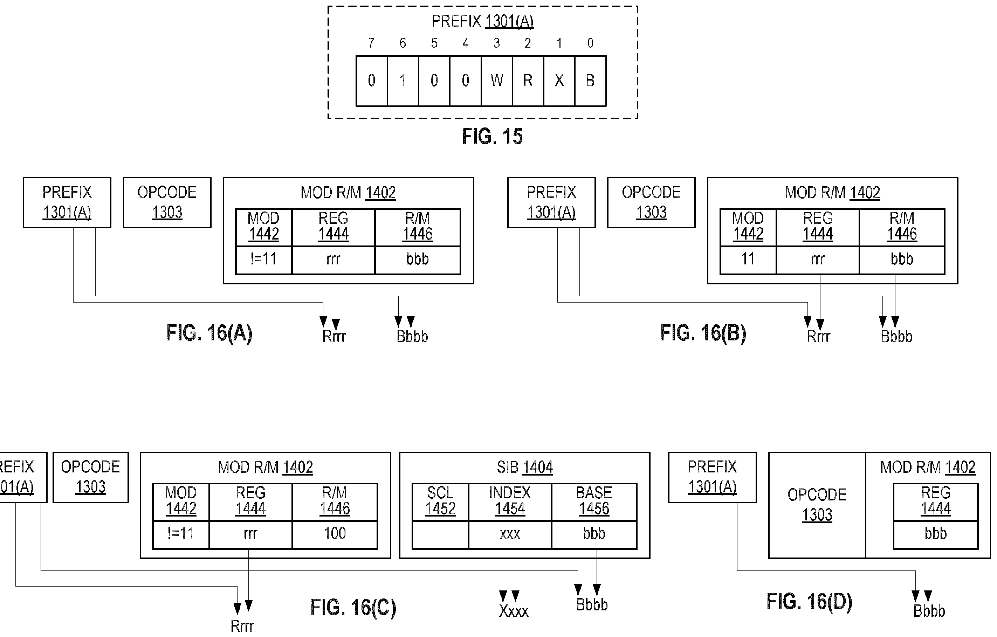

**FIG. 15** illustrates examples of a first prefix 1301(A). In some examples, the first prefix 1301(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1301(A) may specify up to three registers using 3-bit fields depending on the format: 1) using the reg field 1444 and the R/M field 1446 of the MOD R/M byte 1402; 2) using the MOD R/M byte 1402 with the SIB byte 1404 including using the reg field 1444 and the base field 1456 and index field 1454; or 3) using the register field of an opcode.

In the first prefix 1301(A), bit positions 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1444 and MOD R/M R/M field 1446 alone can each only address 8 registers.

In the first prefix 1301(A), bit position 2 (R) may be an extension of the MOD R/M reg field 1444 and may be used to modify the MOD R/M reg field 1444 when that field encodes a general-purpose register, a 64-bit packed data register (e.g., a SSE register), or a control or debug register. R is ignored when MOD R/M byte 1402 specifies other registers or defines an extended opcode.

### Bit position 1 (X) may modify the SIB byte index field 1454.

Bit position 0 (B) may modify the base in the MOD R/M R/M field 1446 or the SIB byte base field 1456; or it may modify the opcode register field used for accessing general purpose registers (e.g., general purpose registers 1225).

**FIGS. 16(A)****-(D)** illustrate examples of how the R, X, and B fields of the first prefix 1301(A) are used. **FIG. 16(A)** illustrates R and B from the first prefix 1301(A) being used to extend the reg field 1444 and R/M field 1446 of the MOD R/M byte 1402 when the SIB byte 14 04 is not used for memory addressing. **FIG. 16(B)** illustrates R and B from the first prefix 1301(A) being used to extend the reg field 1444 and R/M field 1446 of the MOD R/M byte 1402 when the SIB byte 14 04 is not used (register-register addressing). **FIG. 16(C)** illustrates R, X, and B from the first prefix 1301(A) being used to extend the reg field 1444 of the MOD R/M byte 1402 and the index field 1454 and base field 1456 when the SIB byte 14 04 being used for memory addressing. **FIG. 16(D)** illustrates B from the first prefix 1301(A) being used to extend the reg field 1444 of the MOD R/M byte 1402 when a register is encoded in the opcode 1303.

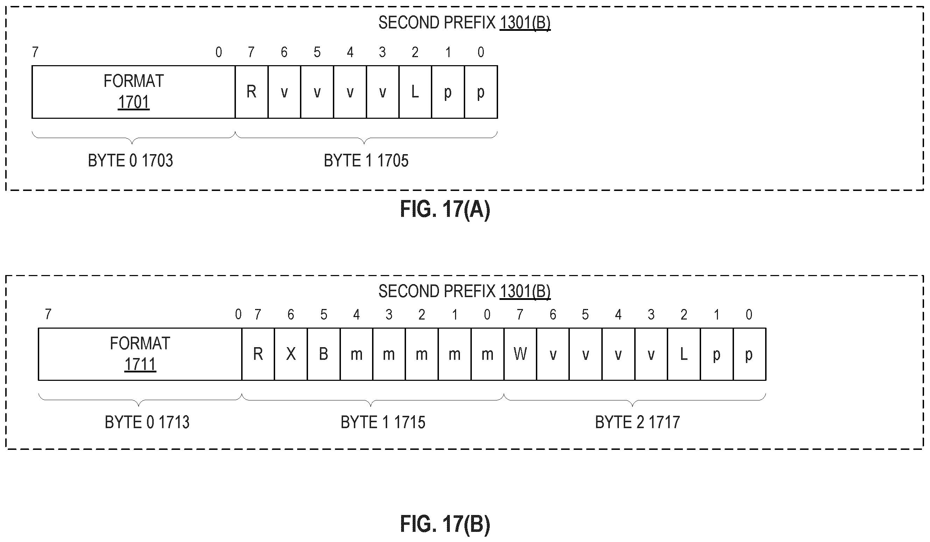

**FIGS. 17(A)****-(B)** illustrate examples of a second prefix 1301(B). In some examples, the second prefix 1301(B) is an example of a VEX prefix. The second prefix 1301(B) encoding allows instructions to have more than two operands, and allows SIMD vector registers (e.g., vector/SIMD registers 1210) to be longer than 64-bits (e.g., 128-bit and 256-bit). The use of the second prefix 1301(B) provides for three-operand (or more) syntax. For example, previous two-operand instructions performed operations such as A = A + B, which overwrites a source operand. The use of the second prefix 1301(B) enables operands to perform nondestructive operations such as A = B + C.

In some examples, the second prefix 1301(B) comes in two forms - a two-byte form and a three-byte form. The two-byte second prefix 1301(B) is used mainly for 128-bit, scalar, and some 256-bit instructions; while the three-byte second prefix 1301(B) provides a compact replacement of the first prefix 1301(A) and 3-byte opcode instructions.

**FIG. 17(A)** illustrates examples of a two-byte form of the second prefix 1301(B). In one example, a format field 1701 (byte 0 1703) contains the value C5H. In one example, byte 1 1705 includes an "R" value in bit[7]. This value is the complement of the "R" value of the first prefix 1301(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1446 to encode the instruction operand that references a memory address or encode either the destination register operand or a source register operand.

Instructions that use this prefix may use the MOD R/M reg field 1444 to encode either the destination register operand or a source register operand, or to be treated as an opcode extension and not used to encode any instruction operand.

For instruction syntax that supports four operands, vvvv, the MOD R/M R/M field 1446 and the MOD R/M reg field 1444 encode three of the four operands. Bits[7:4] of the immediate value field 1309 are then used to encode the third source register operand.

**FIG. 17(B)** illustrates examples of a three-byte form of the second prefix 1301(B). In one example, a format field 1711 (byte 0 1713) contains the value C4H. Byte 1 1715 includes in bits[7:5] "R," "X," and "B" which are the complements of the same values of the first prefix 1301(A). Bits[4:0] of byte 1 1715 (shown as mmmmm) include content to encode, as needed, one or more implied leading opcode bytes. For example, 00001 implies a 0FH leading opcode, 00010 implies a 0F38H leading opcode, 00011 implies a 0F3AH leading opcode, etc.

Bit[7] of byte 2 1717 is used similar to W of the first prefix 1301(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 1446 to encode the instruction operand that references a memory address or encode either the destination register operand or a source register operand.

Instructions that use this prefix may use the MOD R/M reg field 1444 to encode either the destination register operand or a source register operand, or to be treated as an opcode extension and not used to encode any instruction operand.

For instruction syntax that supports four operands, vvvv, the MOD R/M R/M field 1446, and the MOD R/M reg field 1444 encode three of the four operands. Bits[7:4] of the immediate value field 1309 are then used to encode the third source register operand.

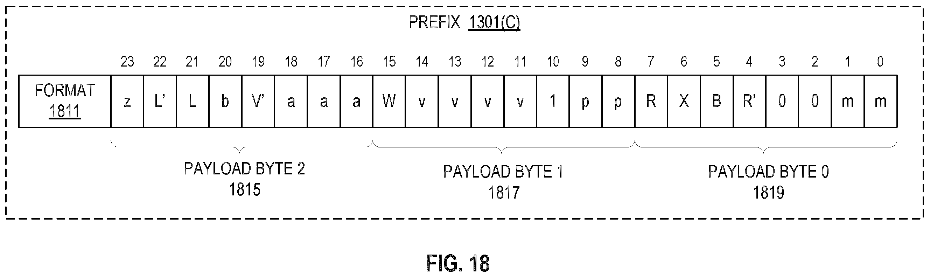

**FIG. 18** illustrates examples of a third prefix 1301(C). In some examples, the third prefix 1301(C) is an example of an EVEX prefix. The third prefix 1301(C) is a four-byte prefix.

The third prefix 1301(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 12**) or predication utilize this prefix. Opmask register allows for conditional processing or selection control. Opmask instructions, whose source/destination operands are opmask registers and treat the content of an opmask register as a single value, are encoded using the second prefix 1301(B).

The third prefix 1301(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1301(C) is a format field 1811 that has a value, in one example, of 62H. Subsequent bytes are referred to as payload bytes 1815-1819 and collectively form a 24-bit value of P[23:0] providing specific capability in the form of one or more fields (detailed herein).

In some examples, P[1:0] of payload byte 1819 are identical to the low two mm bits. P[3:2] are reserved in some examples. Bit P[4] (R') allows access to the high 16 vector register set when combined with P[7] and the MOD R/M reg field 1444. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 1444 and MOD R/M R/M field 1446. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1301(A) and second prefix 1311(B) and may serve as an opcode extension bit or operand size promotion.

P[18:16] specify the index of a register in the opmask (writemask) registers (e.g., writemask/predicate registers 1215). In one example, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differ across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1301(C) are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine readable medium and supplied to various customers or manufacturing facilities to load into the fabrication machines that make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

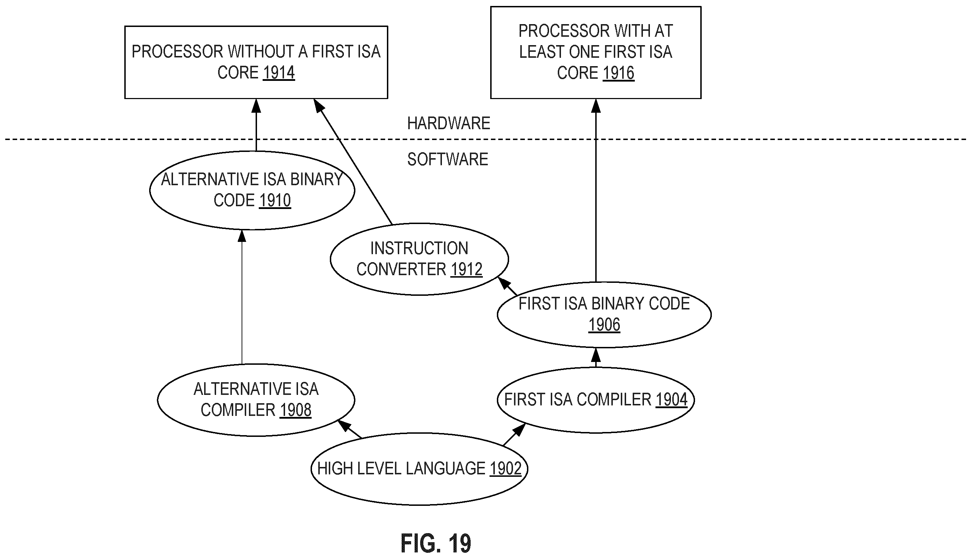

**FIG. 19** is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. **FIG. 19** shows a program in a high-level language 1902 may be compiled using a first ISA compiler 1904 to generate first ISA binary code 1906 that may be natively executed by a processor with at least one first ISA core 1916. The processor with at least one first ISA core 1916 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 1904 represents a compiler that is operable to generate first ISA binary code 1906 (e.g., object code) that can, with or without additional linkage processing, be executed on the processor with at least one first ISA core 1916. Similarly, **FIG. 19** shows the program in the high-level language 1902 may be compiled using an alternative ISA compiler 1908 to generate alternative ISA binary code 1910 that may be natively executed by a processor without a first ISA core 1914. The instruction converter 1912 is used to convert the first ISA binary code 1906 into code that may be natively executed by the processor without a first ISA core 1914. This converted code is not necessarily to be the same as the alternative ISA binary code 1910; however, the converted code will accomplish the general operation and be made up of instructions from the alternative ISA. Thus, the instruction converter 1912 represents software, firmware, hardware, or a combination thereof that, through emulation, simulation or any other process, allows a processor or other electronic device that does not have a first ISA processor or core to execute the first ISA binary code 1906.

Components, features, and details described for any of **FIGs. 2-7** may also optionally apply to **FIG. 1****.** Components, features, and details described for any of the processors disclosed herein (e.g., 100, 300, or 400) may optionally apply to any of the methods of **FIGs. 5-7****,** which in embodiments may optionally be performed by and/or with such processors. Any of the processors described herein (e.g., 100, 300, or 400) in embodiments may optionally be included in any of the systems disclosed herein. Any of the processors disclosed herein e.g., 100, 300, or 400 may optionally have any of the microarchitectures shown herein.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Processor components disclosed herein may be said and/or claimed to be operative, operable, capable, able, configured adapted, or otherwise to perform an operation. For example, a decoder may be said and/or claimed to decode an instruction, an execution unit may be said and/or claimed to store a result, or the like. As used herein, these expressions refer to the characteristics, properties, or attributes of the components when in a powered-off state, and do not imply that the components or the device or apparatus in which they are included is currently powered on or operating. For clarity, it is to be understood that the processors and apparatus claimed herein are not claimed as being powered on or running.

In the description and claims, the terms "coupled" and/or "connected," along with their derivatives, may have been used. These terms are not intended as synonyms for each other. Rather, in embodiments, "connected" may be used to indicate that two or more elements are in direct physical and/or electrical contact with each other. "Coupled" may mean that two or more elements are in direct physical and/or electrical contact with each other. However, "coupled" may also mean that two or more elements are not in direct contact with each other, but yet still cooperate or interact with each other. For example, a front end unit may be coupled with a back end unit through one or more intervening components. In the figures, arrows are used to show connections and couplings.

Some embodiments include an article of manufacture (e.g., a computer program product) that includes a machine-readable medium. The medium may include a mechanism that provides, for example stores, information in a form that is readable by the machine. The machine-readable medium may provide, or have stored thereon, an instruction or sequence of instructions, that if and/or when executed by a machine are operative to cause the machine to perform and/or result in the machine performing one or operations, methods, or techniques disclosed herein.

In some embodiments, the machine-readable medium may include a tangible and/or non-transitory machine-readable storage medium. For example, the non-transitory machine-readable storage medium may include a floppy diskette, an optical storage medium, an optical disk, an optical data storage device, a CD-ROM, a magnetic disk, a magneto-optical disk, a read only memory (ROM), a programmable ROM (PROM), an erasable-and-programmable ROM (EPROM), an electrically-erasable-and-programmable ROM (EEPROM), a random access memory (RAM), a static-RAM (SRAM), a dynamic-RAM (DRAM), a Flash memory, a phase-change memory, a phase-change data storage material, a non-volatile memory, a non-volatile data storage device, a non-transitory memory, a non-transitory data storage device, or the like. The non-transitory machine-readable storage medium does not consist of a transitory propagated signal. In some embodiments, the storage medium may include a tangible medium that includes solid-state matter or material, such as, for example, a semiconductor material, a phase change material, a magnetic solid material, a solid data storage material, etc. Alternatively, a non-tangible transitory computer-readable transmission media, such as, for example, an electrical, optical, acoustical or other form of propagated signals - such as carrier waves, infrared signals, and digital signals, may optionally be used.

Examples of suitable machines include, but are not limited to, a general-purpose processor, a special-purpose processor, a digital logic circuit, an integrated circuit, or the like. Still other examples of suitable machines include a computer system or other electronic device that includes a processor, a digital logic circuit, or an integrated circuit. Examples of such computer systems or electronic devices include, but are not limited to, desktop computers, laptop computers, notebook computers, tablet computers, netbooks, smartphones, cellular phones, servers, network devices (e.g., routers and switches.), Mobile Internet devices (MIDs), media players, smart televisions, nettops, set-top boxes, and video game controllers.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

In the description above, specific details have been set forth in order to provide a thorough understanding of the embodiments. However, other embodiments may be practiced without some of these specific details. Various modifications and changes may be made thereunto without departing from the broader spirit and scope of the disclosure as set forth in the claims. The specification and drawings are, accordingly, to be regarded in an illustrative rather than a restrictive sense. The scope of the invention is not to be determined by the specific examples provided above, but only by the claims below. In other instances, well-known circuits, structures, devices, and operations have been shown in block diagram form and/or without detail in order to avoid obscuring the understanding of the description.

### EXAMPLE EMBODIMENTS

The following examples pertain to further embodiments. Specifics in the examples may be used anywhere in one or more embodiments.

Example 1 is a processor or other apparatus that includes a front end unit. The front end unit is to fetch and decode in parallel a first in-order sequence of instructions and a second in-order sequence of instructions. The first in-order sequence of instructions occurs before the second in-order sequence of instructions in program order. The apparatus also includes a back end unit coupled with the front end unit. The back end unit is to execute decoded instructions provided from the front end unit.

Example 2 includes the processor or other apparatus of Example 1, where the second in-order sequence of instructions is related to the first in-order sequence of instructions based on a control transfer operation.

Example 3 includes the processor or other apparatus of any one of Examples 1 to 2, where a first occurring instruction of the second in-order sequence of instructions is a reconvergent instruction associated with a control flow transfer operation to be performed based on the first in-order sequence of instructions.

Example 4 includes the processor or other apparatus of any one of Examples 1 to 3, where a first occurring instruction of the second in-order sequence of instructions is a target instruction of a return instruction corresponding to a call instruction of the first in-order sequence of instructions.

Example 5 includes the processor or other apparatus of any one of Examples 1 to 4, where the second in-order sequence of instructions is separated from the first in-order sequence of instructions by a set of intervening instructions that are not fetched and decoded in parallel with the first and second in-order sequences of instructions.

Example 6 includes the processor or other apparatus of any one of Examples 1 to 5, where the front end unit is to fetch and decode a first occurring instruction of the second in-order sequence of instructions immediately after fetching and decoding a given instruction of the first in-order sequence of instructions. Also, optionally where the first occurring instruction of the second in-order sequence of instructions is separated from the given instruction of the first in-order sequence of instructions by at least fifty intervening instructions in the program order.

Example 7 includes the processor or other apparatus of any one of Examples 1 to 7, where the front end unit is to stop the fetch and decode of the second in-order sequence of instructions after a predetermined or configurable number of instructions of the second in-order sequence of instructions have been fetched and decoded.

Example 8 includes the processor or other apparatus of any one of Examples 1 to 7, where the front end unit is to fetch and decode instructions of the second in-order sequence of instructions at times when the fetch and decode of instructions of the first in-order sequence of instructions is stalled.

Example 9 includes the processor or other apparatus of any one of Examples 1 to 8, where the front end unit is to fetch and decode a first occurring instruction of the second in-order sequence of instructions at a first time, after a control flow transfer operation corresponding to the first in-order sequence of instructions, when the fetch and decode of instructions of the first in-order sequence of instructions would stall.

Example 10 includes the processor or other apparatus of any one of Examples 1 to 9, where the front end unit includes at least one decoded instruction queue to store decoded instructions of the second in-order sequence of instructions but not to store decoded instructions of the first in-order sequence of instructions.

Example 11 includes the processor or other apparatus of any one of Examples 1 to 10, where the front end unit includes: (1) a first context storage to store branch prediction context for the first in-order sequence of instructions; and (2) at least a second context storage to store branch prediction context for the second in-order sequence of instructions.

Example 12 includes the processor or other apparatus of any one of Examples 1 to 11, where the front end unit includes: (1) circuitry to maintain a subset of all fetched and decoded reconvergent instructions for which the back end unit has relatively larger stall times prior to execution of decoded instructions corresponding to the reconvergent instructions; and (2) circuitry to determine to fetch and decode the second in-order sequence of instructions in parallel with the first in-order sequence of instructions based on a first occurring instruction of the second in-order sequence of instructions being a reconvergent instruction in the subset.

Example 13 is a method including fetching and decoding in parallel a first in-order sequence of instructions and a second in-order sequence of instructions. The first in-order sequence of instructions occurs before the second in-order sequence of instructions in program order. The method also includes executing decoded instructions of the first and second in-order sequences of instructions.

Example 14 includes the method of Example 13, where the fetching and decoding the second in-order sequence of instructions includes fetching and decoding a first occurring instruction of the second in-order sequence of instructions that is a reconvergent instruction associated with a control flow transfer operation performed based on the first in-order sequence of instructions.

Example 15 includes the method of any one of Examples 13 to 14, where the fetching and decoding the second in-order sequence of instructions includes fetching and decoding a first occurring instruction of the second in-order sequence of instructions that is a target instruction of a return instruction corresponding to a call instruction of the first in-order sequence of instructions.

Example 16 includes the method of any one of Examples 13 to 15, further including: (1) storing decoded instructions of the first in-order sequence of instructions in a first decoded instruction queue; and storing decoded instructions of the second in-order sequence of instructions in a second decoded instruction queue.

Example 17 is a system to process instructions including an interconnect and a processor coupled with the interconnect. The processor is to fetch and decode in parallel a first in-order sequence of instructions and a second in-order sequence of instructions. The first in-order sequence of instructions occurs before the second in-order sequence of instructions in program order. The system also includes a dynamic random access memory (DRAM) coupled with the interconnect.

Example 18 includes the system of Example 17, where the second in-order sequence of instructions is related to the first in-order sequence of instructions based on a control transfer operation.

Example 19 includes the system of any one of Examples 17 to 18, where a first occurring instruction of the second in-order sequence of instructions is a target instruction of a return instruction corresponding to a call instruction of the first in-order sequence of instructions.

Example 20 includes the system of any one of Examples 17 to 19, where the processor includes at least one decoded instruction queue to store decoded instructions of the second in-order sequence of instructions but not to store decoded instructions of the first in-order sequence of instructions.

Example 21 is a processor or other apparatus that includes a fetch and decode unit. The fetch and decode unit is to fetch and decode in parallel a first in-order sequence of instructions and a second in-order sequence of instructions. The first in-order sequence of instructions occurs before the second in-order sequence of instructions in program order. The apparatus also includes a plurality of execution units coupled with the fetch and decode unit. The plurality of execution units are to execute decoded instructions provided from the front end unit.

Example 22 is a processor or other apparatus operative to perform the method of any one of Examples 13 to 16.

Example 23 is a processor or other apparatus that includes means for performing the method of any one of Examples 13 to 16.

Example 24 is a processor or other apparatus that includes any combination of modules and/or units and/or logic and/or circuitry and/or means operative to perform the method of any one of Examples 13 to 16.

Example 25 is an optionally non-transitory and/or tangible machine-readable medium, which optionally stores or otherwise provides instructions including a first instruction, the first instruction if and/or when executed by a processor, computer system, electronic device, or other machine, is operative to cause the machine to perform the method of any one of Examples 13 to 16.

## Claims

1. A processor comprising:
a front end unit, the front end unit to fetch and decode in parallel a first in-order sequence of instructions and a second in-order sequence of instructions, the first in-order sequence of instructions occurring before the second in-order sequence of instructions in program order; and
a back end unit coupled with the front end unit, the back end unit to execute decoded instructions provided from the front end unit.

2. The processor of claim 1, wherein the second in-order sequence of instructions is related to the first in-order sequence of instructions based on a control transfer operation.

3. The processor of claim 1 or 2, wherein a first occurring instruction of the second in-order sequence of instructions is a reconvergent instruction associated with a control flow transfer operation to be performed based on the first in-order sequence of instructions.

4. The processor of any one of claims 1 to 3, wherein a first occurring instruction of the second in-order sequence of instructions is a target instruction of a return instruction corresponding to a call instruction of the first in-order sequence of instructions.

5. The processor of any one of claims 1 to 4, wherein the second in-order sequence of instructions is separated from the first in-order sequence of instructions by a set of intervening instructions that are not fetched and decoded in parallel with the first and second in-order sequences of instructions.

6. The processor of any one of claims 1 to 5, wherein the front end unit is to fetch and decode a first occurring instruction of the second in-order sequence of instructions immediately after fetching and decoding a given instruction of the first in-order sequence of instructions, and wherein the first occurring instruction of the second in-order sequence of instructions is separated from the given instruction of the first in-order sequence of instructions by at least fifty intervening instructions in the program order.

7. The processor of any one of claims 1 to 6, wherein the front end unit is to stop the fetch and decode of the second in-order sequence of instructions after a predetermined or configurable number of instructions of the second in-order sequence of instructions have been fetched and decoded.

8. The processor of any one of claims 1 to 7, wherein the front end unit is to fetch and decode instructions of the second in-order sequence of instructions at times when the fetch and decode of instructions of the first in-order sequence of instructions is stalled.

9. The processor of any one of claims 1 to 8, wherein the front end unit is to fetch and decode a first occurring instruction of the second in-order sequence of instructions at a first time, after a control flow transfer operation corresponding to the first in-order sequence of instructions, when the fetch and decode of instructions of the first in-order sequence of instructions would stall.

10. The processor of any one of claims 1 to 9, wherein the front end unit includes at least one decoded instruction queue to store decoded instructions of the second in-order sequence of instructions but not to store decoded instructions of the first in-order sequence of instructions, and wherein the front end unit includes:
a first context storage to store branch prediction context for the first in-order sequence of instructions; and
at least a second context storage to store branch prediction context for the second in-order sequence of instructions.

11. A method comprising:
fetching and decoding in parallel a first in-order sequence of instructions and a second in-order sequence of instructions, the first in-order sequence of instructions occurring before the second in-order sequence of instructions in program order; and
executing decoded instructions of the first and second in-order sequences of instructions.

12. The method of claim 11, wherein the fetching and decoding the second in-order sequence of instructions includes fetching and decoding a first occurring instruction of the second in-order sequence of instructions that is a reconvergent instruction associated with a control flow transfer operation performed based on the first in-order sequence of instructions.

13. The method of claim 11 or 12, wherein the fetching and decoding the second in-order sequence of instructions includes fetching and decoding a first occurring instruction of the second in-order sequence of instructions that is a target instruction of a return instruction corresponding to a call instruction of the first in-order sequence of instructions.

14. The method of any one of claims 11 to 13, further comprising:
storing decoded instructions of the first in-order sequence of instructions in a first decoded instruction queue; and
storing decoded instructions of the second in-order sequence of instructions in a second decoded instruction queue.

15. A computer program comprising instructions which, when the program is executed by a computer, cause the computer to carry out the method of any one of claims 11 to 14.
